(19) Europäisches Patentamt / European Patent Office / Office européen des brevets

(11) **EP 4 288 215 B1**

(12) # FASCICULE DE BREVET EUROPEEN

(45) Date de publication et mention de la délivrance du brevet:
**06.11.2024 Bulletin 2024/45**

(21) Numéro de dépôt: **22708189.0**

(22) Date de dépôt: **03.02.2022**

(51) Classification Internationale des Brevets (IPC):
***B03D 1/01*** *(2006.01)* ***B03D 1/016*** *(2006.01)*
***C08G 63/685*** *(2006.01)*

(52) Classification Coopérative des Brevets (CPC):
**C08G 63/672; B03D 1/0043; B03D 1/008; B03D 1/011; B03D 1/016; C08G 63/6856;**
B03D 2201/02

(86) Numéro de dépôt international:
**PCT/FR2022/050203**

(87) Numéro de publication internationale:
**WO 2022/167756 (11.08.2022 Gazette 2022/32)**

(54) **POLYESTERAMINES ET POLYESTERQUATS**
POLYESTERAMINEN UND POLYESTERQUATS
POLYESTERAMINES AND POLYESTERQUATS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **04.02.2021 FR 2101067**

(43) Date de publication de la demande:
**13.12.2023 Bulletin 2023/50**

(73) Titulaire: **ARKEMA FRANCE**
**92700 Colombes (FR)**

(72) Inventeurs:
- **DELROISSE, Henry**
  **69491 PIERRE-BENITE Cedex (FR)**
- **BARRETO, Gilles**
  **69491 PIERRE-BENITE Cedex (FR)**
- **JORDA, Eric**
  **92705 COLOMBES CEDEX (FR)**
- **BALOCHE, Alain**
  **62051 SAINT LAURENT-BLANGY Cedex (FR)**

(56) Documents cités:
**WO-A1-2012/028542**
**WO-A1-2019/034817**
**FR-A1- 3 047 675**
**US-B1- 7 101 538**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

La présente invention concerne des composés à structures polyesteramines et polyesteramines quaternisées, dits « polyesterquats ». Ces composés sont nouveaux et peuvent trouver des utilisations dans de très nombreux domaines d'application et, notamment, en tant qu'agents tensioactifs, en tant qu'inhibiteurs de corrosion et autres, pour ne citer que quelques applications possibles.

Les alkylamines grasses et leurs dérivés sous forme ammonium quaternaire sont des substances chimiques particulièrement utiles et largement employées aujourd'hui dans une grande variété d'industries, que ce soit par exemple dans les domaines de l'hygiène, de la cosmétique, de la détergence, de la santé humaine et animale, de l'agrochimie, de l'industrie textile, de l'industrie minière, de l'industrie des engrais, de l'industrie du bitume, de la construction routière, de l'entretien des routes et de l'étanchéité, de l'industrie du traitement de l'eau et plus généralement des industries chimiques, pétrolières et gazières.

Bien que de nombreuses alkylamines et leurs dérivés ammonium quaternaire sont bien déjà connus et utilisés, la recherche de nouvelles molécules encore plus efficaces, à propriétés améliorées, continue cependant activement. À titre d'exemple, au cours des 20 dernières années, une autre famille de composés contenant de l'azote et de poids moléculaire plus élevé est apparue dans la littérature. Ces composés sont de structure polymère ou oligomère et comportent des fonction amine et ammonium quaternaire.

Ainsi, la demande internationale WO2008089906 décrit un produit de réaction d'un acide gras avec un diacide et une (alkyl)polyéthanolamine, ledit produit de réaction étant ensuite quaternisé et utilisé en tant que collecteur pour la flottation de certains types de minerais. De manière similaire, la demande internationale WO2011147855 décrit des composés ammonium quaternaire issus de la réaction d'un alcool gras avec un diacide et une (alkyl)polyéthanolamine, et utilisés pour la flottation de silicates.

Plus récemment encore, les demandes internationales WO2012028542, WO2013038192 et WO2014095797 décrivent divers polyesteramines et polyesterquats utilisables comme agents anti-corrosion ou agents de flottation ou comme dépressants.

Il existe cependant encore un besoin pour de nouveaux composés oligomères ou polymères cationiques pour utilisations dans les domaines d'application énumérés ci-dessus, nouveaux composés qui peuvent être plus facilement préparés, plus stables, moins coûteux à synthétiser et présenter en outre de meilleures propriétés environnementales en termes de toxicité et de biodégradabilité, et ayant des performances techniques améliorées.

Les inventeurs ont maintenant découvert une nouvelle famille de polyesteramines et polyesterquats qui va être maintenant décrite en détail dans la suite du présent exposé. Sauf indication contraire, toutes les plages de valeurs présentées ci-après s'entendent bornes incluses.

Ainsi, et selon un premier aspect, la présente invention concerne un composé pouvant être obtenu par la condensation par estérification de :

A/ au moins une amine grasse alcoxylée de formule (I), ou du produit de quaternisation partielle ou totale de ladite amine grasse alcoxylée de formule (I) :

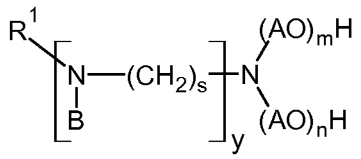

(I)

dans laquelle :

- $R^1$ est choisi parmi un radical hydrocarbyle ayant de 8 à 24 atomes de carbone, de préférence de 10 à 24, plus préférablement de 12 à 24 atomes de carbone, et un radical de formule $R^4$-O-(A'O)$_w$-T-, dans laquelle $R^4$ est un radical hydrocarbyle ayant de 8 à 24 atomes de carbone, de préférence de 10 à 24, plus préférablement de 12 à 24 atomes de carbone, w représente un entier compris entre 0 et 20, de préférence entre 0 et 10, plus préférablement entre 0 et 6, et encore plus préférablement entre 0 et 4, A'O représente un radical alkylénoxy contenant 2 à 4 atomes de carbone, de préférence 2 ou 3 atomes de carbone, plus préférablement 2 atomes de carbone ; T représente un radical alkylène contenant de 1 à 6 atomes de carbone, de préférence de 1 à 4 atomes de carbone, de manière préférée entre toutes à 2 ou à 3 atomes de carbone,
- AO est un radical alkylénoxy contenant de 2 à 4 atomes de carbone, de préférence à 2 ou à 3 atomes de carbone, plus préférablement à 2 atomes de carbone,
- B est choisi parmi un radical alkyle en $C_1$-$C_4$, un radical aryle, un radical arylalkyle, et un radical $(AO)_{m'}H$,

- n, m et m', identiques ou différents, représentent chacun indépendamment l'un de l'autre, un entier compris entre 1 et 20, de préférence entre 1 et 10, plus préférablement entre 1 et 6, et encore plus préférablement entre 1 et 4,
- s représente 1, 2 ou 3, de préférence 2 ou 3, et
- y est un entier allant de 0 à 5, de préférence de 0 à 3, plus préférablement y est 0 ou 1, encore plus préférablement y est 0,

B/ avec au moins un acide dicarboxylique, ou un dérivé de celui-ci, de formule (II) :

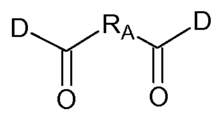

(II),

dans laquelle

- D est choisi parmi -F, -Cl, -Br et -O-$R^3$, où $R^3$ est choisi parmi hydrogène et un radical alkyle en $C_1$-$C_4$,
- $R_A$ est choisi dans le groupe constitué de :

    ◦ une liaison directe,
    ◦ une chaîne hydrocarbonée linéaire ou ramifiée, saturée ou insaturée en $C_1$-$C_{20}$ éventuellement substituée par un ou plusieurs radicaux -OH, de préférence un radical alkylène de formule $-(CH_2)_z-$, dans laquelle z est un entier de 1 à 20, de préférence de 1 à 10, de préférence de 2 à 6, et de manière préférée entre toutes 2 à 4, un radical alkylène substitué par 1 ou 2 radicaux -OH, un radical alcénylène ayant de 1 à 20, de préférence de 1 à 10 atomes de carbone, et éventuellement substitué par 1 ou 2 radicaux méthyle et/ou méthylène,
    ◦ un radical cycloalkylène,
    ◦ un radical cycloalcénylène et
    ◦ un radical arylène,

C/ avec au moins un dérivé de (alkyl)alcanolamine de formule (III) ou du produit de quaternisation partielle ou totale dudit dérivé de (alkyl)alcanolamine de formule (III) :

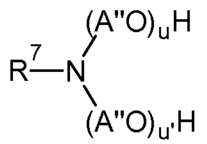

(III)

dans laquelle :

- A"O représente un radical alkylénoxy contenant de 2 à 4 atomes de carbone, de préférence 2 ou 3 atomes de carbone, plus préférablement 2 atomes de carbone,
- u représente un entier compris entre 1 et 20, de préférence entre 1 et 10, plus préférablement entre 1 et 6, et encore plus préférablement entre 1 et 4,
- u' représente un entier compris entre 1 et 20, de préférence entre 1 et 10, plus préférablement entre 1 et 6, et encore plus préférablement entre 1 et 4,
- $R^7$ est choisi parmi un radical hydrocarbyle ayant de 1 à 7, de préférence de 1 à 6 atomes de carbone, plus préférablement de 1 à 4 atomes de carbone, un radical aryle ou arylalkyle, un radical de formule H-$(OA")_v$- (dans laquelle v représente un entier compris entre 1 et 20, de préférence entre 1 et 10, plus préférablement entre 1 et 6, et encore plus préférablement entre 1 et 4), un radical $HO(CH_2)_q$-, où q représente un entier de 1 à 10, de préférence de 2 à 6, et de manière préférée entre toutes q est 2 ou 3, et un radical de formule (IV) suivante :

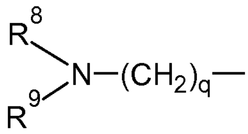

(IV),

- dans laquelle $R^8$ et $R^9$, identiques ou différents, sont choisis parmi un radical hydrocarbyle contenant de 1 à 6 atomes de carbone, de préférence de 1 à 4 atomes de carbone et q est un entier de 1 à 10, de préférence de 2 à 6, et de manière préférée entre toutes q est 2 ou 3,
- ou bien $R^8$ et $R^9$, conjointement avec l'atome d'azote auquel ils sont liés, forment un cycle à 5, 6 ou 7 sommets, comportant éventuellement un ou plusieurs hétéroatome(s) choisi(s) parmi oxygène, azote et soufre, et

D/ avec au moins un acide gras de formule (V) suivante :

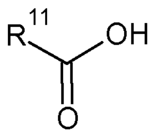

(V)

dans laquelle $R^{11}$ est choisi parmi un radical hydrocarbyle contenant de 8 à 24 atomes de carbone, de préférence de 10 à 24, plus préférablement de 12 à 24 atomes de carbone, et un radical de formule $R^4$-O-(A'O)$_w$-T-, dans laquelle A', $R^4$, T et w sont tels que définis précédemment.

Dans la présente description, « hydrocarbyle » désigne une chaîne hydrocarbyle linéaire ou ramifiée, saturée ou insaturée, c'est-à-dire une chaîne hydrocarbonée linéaire ou ramifiée, saturée ou pouvant contenir une ou plusieurs doubles liaisons et/ou triples liaisons et/ou cycles. Le terme « aryle » désigne par exemple phényle ou naphtyle, et le terme « phénylalkyle » désigne par exemple benzyle.

Dans un mode de réalisation préféré, le composé selon la présente invention est obtenu par la condensation par estérification telle que définie ci-dessus, dans laquelle, dans l'amine grasse de formule (I), $R^1$ comporte 8 ou plus de 8 atomes de carbone, typiquement de 8 à 24 atomes de carbone, de préférence de 10 à 24, plus préférablement de 12 à 24 atomes de carbone, et dans le dérivé de (alkyl)alcanolamine de formule (III), $R^7$ comporte 6 atomes de carbone ou moins, typiquement de 1 à 6 atomes de carbone, plus préférablement 1 à 4 atomes de carbone, limites incluses.

Dans un mode de réalisation encore plus préféré, le composé selon la présente invention est obtenu par la condensation par estérification telle que définie ci-dessus, dans laquelle, dans l'amine grasse de formule (I) et dans le dérivé de (alkyl)alcanolamine de formule (III), $R^1$ et $R^7$ sont tels que la différence de nombre d'atomes de carbone qu'ils comportent est supérieur à 2, typiquement de 2 à 23, de préférence 5 à 23, plus préférablement 10 à 23, limites incluses.

Il est entendu que les acides dicarboxyliques ou dérivés de ceux-ci de formule (II) comprennent en outre leurs formes anhydrides correspondantes. Il est en outre entendu que lorsque la chaîne alkylénoxy contient plus d'un radical alkylénoxy, les radicaux alkylénoxy peuvent être identiques ou différents. De manière similaire, lorsque y est supérieur à 1 (un), les motifs de répétition peuvent être identiques ou différents.

La présente invention concerne en outre le composé de la présente invention (pouvant être obtenu par réaction entre l'amine grasse alcoxylée de formule (I), l'acide dicarboxylique ou un dérivé de celui-ci de formule (II), le dérivé de (alkyl)alcanolamine de formule (III) et l'acide gras de formule (V)), le composé obtenu après réaction supplémentaire dans laquelle un ou plusieurs des atomes d'azote est(sont) quaternisé(s) par réaction avec un réactif de formule $R^5X$, dans laquelle $R^5$ est choisi parmi un radical hydrocarbyle en $C_1$-$C_6$, de préférence un radical alkyle en $C_1$-$C_4$, aryle et arylalkyle, et X est un groupe partant quelconque connu de l'homme du métier et, de préférence, X est généralement choisi parmi les halogènes, les sulfates, les carbonates, les sulfonates et autres.

La formule (1) ci-dessous est une représentation possible des composés de la présente invention, comme décrit ci-dessus, et pouvant être obtenus par la condensation par estérification de l'amine grasse alcoxylée de formule (I) (comprenant son produit de quaternisation partielle ou totale), avec l'acide dicarboxylique, ou un dérivé de celui-ci, de formule (II), avec un dérivé de (alkyl)alcanolamine de formule (III) (comprenant son produit de quaternisation partielle ou totale), et avec l'acide gras de formule (V).

Par conséquent, et selon un deuxième aspect, la présente invention concerne un composé de formule générale (1) :

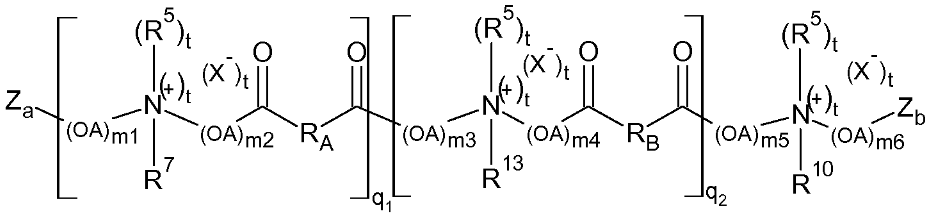

(1)

dans laquelle :

- $R^5$ et X sont tels que définis ci-dessus,
- t représente 0 ou 1, étant entendu que les indices « t », indépendamment les uns des autres, présents dans la formule peuvent être identiques ou différents,
- $Z_a$ et $Z_b$, identiques ou différents, sont chacun choisis parmi un atome d'hydrogène, un radical -(C=O)-$R_A$-(C=O)OH, un radical -(C=O)-$R_B$-(C=O)OH et un radical -(C=O)$R^{11}$, où $R^{11}$ est tel que défini précédemment, avec la condition qu'au moins un des deux groupes $Z_a$ et $Z_b$ est un radical -(C=O)$R^{11}$,
- $R_A$ et $R_B$, identiques ou différents, sont choisis indépendamment l'un de l'autre parmi :

    - une liaison directe,
    - une chaîne hydrocarbonée linéaire ou ramifiée, saturée ou insaturée en $C_1$-$C_{20}$ facultativement substituée par un ou plusieurs radicaux -OH, de préférence un radical alkylène de formule $-(CH_2)_z-$, dans laquelle z est un entier de 1 à 20, de préférence de 1 à 10, de préférence de 2 à 6, et de manière préférée entre toutes de 4, un radical alkylène substitué, ledit radical alkylène étant substitué par 1 ou 2 radicaux -OH, un radical alcénylène ayant de 1 à 20, de préférence de 1 à 10 atomes de carbone, un radical alcénylène substitué, ledit radical alcénylène étant substitué par 1 ou 2 radicaux méthyle et/ou méthényle,
    - un radical cycloalkylène,
    - un radical cycloalcénylène, et
    - un radical arylène.

- $q_1$ et $q_2$, identiques ou différents, représentent chacun un entier compris entre 0 et 15, de préférence entre 0 et 10, plus préférablement entre 0 et 5, étant entendu que :

    * la somme $q_1+q_2$ est différent de 0, et
    * lorsque $q_1$ est nul alors $R^{10}$et $R^7$ sont identiques, et
    * lorsque $q_2$ est nul alors $R^{10}$ et $R^{13}$ sont identiques, et
    * les motifs répétitifs présents $q_1$ fois et $q_2$ fois peuvent être arrangés de manière aléatoire, alternée, statistique, séquencée ou par blocs,

- OA représente un radical alkylénoxy contenant de 2 à 4 atomes de carbone, de préférence 2 ou 3 atomes de carbone, plus préférablement 2 atomes de carbone, sachant que tous les radicaux OA présents dans le composé de formule (1) sont chacun, indépendamment les uns des autres, identiques ou différents,
- $m_1$, $m_2$, $m_3$, $m_4$, $m_5$ et $m_6$, identiques ou différents, et indépendamment les uns des autres, représentent chacun un entier compris entre 1 et 20, de préférence entre 1 et 10, plus préférablement entre 1 et 6, et encore plus préférablement entre 1 et 5,
- chaque radical $R^{13}$, indépendamment l'un de l'autre, représente $R^1$ ou un radical $R^{12}$-$(G)_y$-,
- $R^{10}$ représente $R^{13}$ ou $R^7$,
- $R^7$ est choisi parmi un radical hydrocarbyle ayant 1 à 7, de préférence 1 à 6 atomes de carbone, plus préférablement 1 à 4 atomes de carbone, un radical aryle ou arylalkyle (par exemple, un radical phényle ou naphtyle), un radical de formule H-$(OA")_v$- (dans laquelle v représente un entier compris entre 1 et 20, de préférence entre 1 et 10, plus préférablement entre 1 et 6, et encore plus préférablement entre 1 et 4, limites incluses), $HO(CH_2)_q$-, où q représente un entier de 1 à 10, de préférence de 2 à 6, et de manière préférée entre toutes q est 2 ou 3, et un radical de formule (2) :

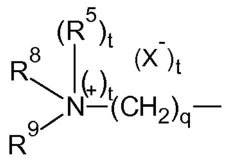

(2)

dans laquelle $R^5$, X et t sont tels que définis précédemment, et $R^8$ et $R^9$, identiques ou différents, sont choisis parmi un radical hydrocarbyle ayant 1 à 6 atomes de carbone, de préférence 1 à 4 atomes de carbone et q est un entier de 1 à 10, de préférence de 2 à 6, limites incluses, et de manière préférée entre toutes q est 2 ou 3, ou bien $R^8$ et $R^9$, conjointement avec l'atome d'azote auquel ils sont liés, forment un cycle à 5, 6 ou 7 sommets, comportant facultativement un ou plusieurs hétéroatome(s) choisi(s) parmi oxygène, azote et soufre,

- $R^{12}$ est choisi parmi un radical hydrocarbyle ayant 8 à 24 atomes de carbone, de préférence 10 à 24, plus préférablement 12 à 24 atomes de carbone, et un radical de formule $R^4$-O-(A'O)$_w$-T-, dans laquelle $R^4$ est un radical hydrocarbyle ayant 8 à 24 atomes de carbone, de préférence 12 à 24 atomes de carbone, w représente un entier compris entre 0 et 20, de préférence entre 0 et 10, plus préférablement entre 0 et 6, et encore plus préférablement entre 0 et 4, A'O représente un radical alkylénoxy contenant 2 à 4 atomes de carbone, de préférence 2 ou 3 atomes de carbone, plus préférablement 2 atomes de carbone ; et T représente un radical alkylène comportant de 1 à 6 atomes de carbone, de préférence de 1 à 4 atomes de carbone, de manière préférée entre toutes 2 ou 3 atomes de carbone,
- $R^1$ est tel que défini ci-dessus,
- G représente un radical de formule (3) :

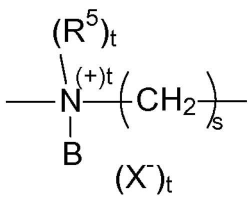

(3)

dans laquelle :

- $R^5$, X et t sont tels que définis ci-dessus,
- B est choisi parmi les radicaux alkyle en $C_1$-$C_4$, aryle et arylalkyle, et
- s représente 1, 2 ou 3, de préférence 2 ou 3,

étant entendu que si plusieurs variables de même dénomination sont présentes dans le composé de formule (1), celles-ci peuvent être identiques ou différentes, indépendamment les unes des autres.

Dans un mode de réalisation particulier, l'amine grasse alcoxylée de formule (I) est l'amine grasse alcoxylée de formule (IA) :

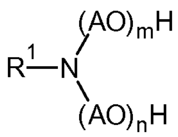

(IA)

qui est l'amine grasse alcoxylée de formule (I) dans laquelle y représente 0, et $R^1$, AO, m et n sont tels que définis ci-dessus,
ainsi que ses dérivés partiellement ou totalement quaternisés correspondants.

Dans un autre mode de réalisation particulier, le dérivé d'(alkyl)alcanolamine de formule (III) est le dérivé d'(alkyl)alcanolamine de formule (IIIA) :

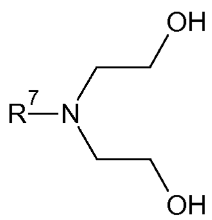

(IIIA)

qui est l'(alkyl)alcanolamine de formule (III) dans laquelle u et u' représentent chacun 1, A"O est éthylènoxy et $R^7$ est tel que défini ci-dessus. Dans le composé de formule (IIIA) ci-dessus, $R^7$ est de préférence un radical hydrocarbyle ayant 1 à 4 atomes de carbone. Le composé de formule (IIIA) ci-dessus couvre en outre ses dérivés partiellement ou totalement quaternisés correspondants.

Le dérivé d'acide dicarboxylique de formule générale (II) décrit précédemment peut être un acide dicarboxylique ou dérivé d'acide dicarboxylique ou anhydride quelconque connu de l'homme du métier. Typiquement le dérivé d'acide dicarboxylique de formule (II) peut être un acide dicarboxylique, un halogénure, par exemple un chlorure, d'acide dicarboxylique, un diester d'un acide dicarboxylique, ou un anhydride cyclique d'un acide dicarboxylique. Les dérivés de formule (II) les plus adaptés dans le cadre de la présente invention sont les acides dicarboxyliques et leurs anhydrides cycliques correspondants.

Des exemples illustratifs de dérivés d'acide dicarboxylique de formule (II) comprennent l'acide oxalique, l'acide malonique, l'acide succinique, l'acide glutarique, l'acide glutaconique, l'acide adipique, l'acide muconique, l'acide pimélique, l'acide phtalique et ses isomères, l'acide tétrahydrophtalique, l'acide malique, l'acide maléique, l'acide fumarique, l'acide subérique, l'acide mésaconique, l'acide sébacique, l'acide azélaïque, l'acide tartrique, l'acide itaconique, l'acide glutinique, l'acide citraconique, l'acide brassylique, l'acide dodécanedioïque, l'acide traumatique, l'acide thapsique, leurs chlorures d'acide correspondants, leurs esters méthyliques ou éthyliques correspondants, et leurs anhydrides cycliques correspondants, l'anhydride phtalique ainsi que des mélanges de ceux-ci.

Selon un mode de réalisation tout particulièrement préféré de la présente invention, les dérivés d'acide dicarboxylique de formule (II) tout particulièrement adaptés sont choisis parmi l'acide oxalique, l'acide malonique, l'acide succinique, l'acide glutarique, l'acide adipique, l'acide pimélique, l'acide phtalique et ses isomères, l'acide tétrahydrophtalique, l'acide malique, l'acide tartrique, l'acide itaconique, leurs chlorures d'acide correspondants, leurs esters méthyliques ou éthyliques correspondants, et leurs anhydrides cycliques correspondants, l'anhydride phtalique, ainsi que des mélanges de ceux-ci.

Les amines grasses alcoxylées de formule (I) définies plus haut sont soit directement disponibles dans le commerce ou peuvent être préparées selon tout procédé connu dans la littérature, et peuvent être, par exemple, aisément préparées par alcoxylation d'amines grasses de formule (a) :

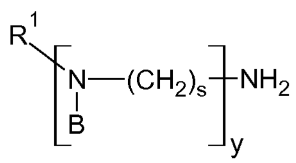

(a)

dans laquelle $R^1$, B, s et y sont tels que définis ci-dessus.

Des exemples illustratifs d'amines grasses de formule (a) ci-dessus tout particulièrement adaptées pour utilisation en tant que matériaux de départ pour la préparation d'amines grasses alcoxylées de formule (I) comprennent, sans y être limitées, les amines grasses de formule (a1) dans laquelle y représente 0 et les amines grasses de formule (a2) dans laquelle y représente 1, s représente 3 et B représente méthyle :

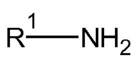

(a1)

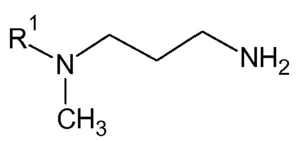

(a2)

Formules (a1) et (a2) dans lesquelles $R^1$ est tel que défini ci-dessus.

Des exemples particuliers d'amines de formule (a1) sont les amines pour lesquelles $R^1$ représente un radical de formule $R^4$-O-$(A'O)_w$-T-, et répondent à la formule (a3) suivante :

$R^4$-O-T-$NH_2$ (a3),

dans laquelle $R^4$, et T sont tels que définis ci-dessus et w est 0.

Des exemples plus spécifiques des amines de formules (a1), (a2) et (a3) mentionnées ci-dessus comprennent, mais ne sont pas limités à, la 2-éthylhexylamine, la 2-octylamine, la 2-propylheptylamine, la n-octylamine, la n-décylamine, la n-dodécylamine, la n-tétradécylamine, la n-hexadécylamine, la n-octadécylamine, l'oléylamine, l'érucylamine, la N-(n-décyl)-N-méthyl-triméthylènediamine, la N-(n-dodécyl)-N-méthyltriméthylènediamine, la N-érucyl-N-méthyltriméthylènediamine, l'isotridécyl-*poly*-(propoxy)amine, la 2-octyl-*poly*(propoxy)amine, les amines produites à partir des acides gras provenant d'huiles végétales ou de graisses animales, telles que huile de colza, huile de tournesol, huile de soja, huile de coco, huile de coprah, huile de palme, tall-oil, suif, et autres, et notamment la N-(coco)-N-méthyltriméthylènediamine, la N-(colza)-N-méthyltriméthylènediamine, la N-(soja)-N-méthyl-triméthylènediamine, la N-(suif)-N-méthyltriméthylènediamine, la N-(suif hydrogéné)-N-méthyl-triméthylènediamine, et autres, ainsi que des mélanges de deux ou plusieurs d'entre elles, en toutes proportions.

Selon un mode de réalisation de l'invention, les amines mentionnées ci-dessus sont des amines grasses obtenues à partir d'huile ou d'acides naturels (végétaux ou animaux) et des mélanges de ceux-ci, par exemple des acides gras de noix de coco, des acides gras de suif, des huiles de colza, des huiles de tournesol, des huiles de soja et des huiles de palme.

Ces amines grasses sont ensuite typiquement alcoxylées avec 2 à 40, de préférence 2 à 20, plus préférablement 2 à 12 et encore plus préférablement 2 à 8 EO (motifs d'oxyde d'éthylène), et/ou 2 à 40, de préférence 2 à 20, plus préférablement 2 à 12 et encore plus préférablement 2 à 8 PO (motifs d'oxyde de propylène), et/ou 2 à 40, de préférence 2 à 20, plus préférablement 2 à 12 et encore plus préférablement 2 à 8 BO (motifs d'oxyde de butylène). Des blocs avec EO sont généralement ajoutés en premier et PO et/ou BO en dernier, ou des blocs avec PO et/ou BO ajoutés en premier et EO en dernier, ou des successions de plus de deux blocs sont ajoutées, ou des mélanges d'EO et PO et/ou BO, pour produire des produits alcoxylés de façon aléatoire de formule générale (I). L'alcoxylation peut être effectuée par un procédé adapté quelconque connu dans l'art en utilisant, par exemple, un catalyseur alcalin, tel que l'hydroxyde de potassium (KOH), ou un catalyseur acide, la catalyse dimétallique (catalyse DMC), voire sans catalyseur.

Comme indiqué précédemment certains composés de formule (I) sont disponibles dans le commerce et parmi ceux-ci, on peut citer, de manière non limitative le Noramox® SD20, le Noramox® SD15, le Noramox® S11, le Noramox® S5, le Noramox® S7, le Noramox® S2, le Noramox® SH2, le Noramox® O2, le Noramox® O5, le Noramox® C2, le Noramox® C5, et le Noramox® C15, qui sont tous disponibles auprès de la Société Arkema. D'autres exemples de produits de formule (I) comprennent notamment la Tomamine® E-17-5 et la Tomamine® E-T-2, commercialisées par Air Products.

Des dérivés d'(alkyl)alcanolamine de formule (III) sont disponibles ou peuvent être préparés selon tout procédé décrit dans la littérature. Des exemples illustratifs de dérivés d'(alkyl)alcanolamines de formule (III) adaptés comprennent, mais ne sont pas limités à, la triéthanolamine, la méthyldiéthanolamine, l'éthyldiéthanolamine, la propyldiéthanolamine, la butyldiéthanolamine, l'isobutyldiéthanolamine, la pentyldiéthanolamine, la phényl-diéthanolamine, l'hexyldiéthanolamine, l'heptyldiéthanolamine, ainsi que leurs produits d'alcoxylation correspondants.

D'autres exemples d'amines adaptées en tant que matériau de départ pour la préparation de dérivés alcoxylés de formule (III) comprennent, sans caractère limitatif, la méthylamine, l'éthylamine, les propylamines, les butylamines, les pentylamines, les hexylamines, les heptylamines, la diméthylaminoéthylamine, la diéthylaminoéthylamine, la diméthylaminopropylamine (DMAPA), la diéthylaminopropylamine (DEAPA), la dipropyl-aminopropylamine, la dibutylaminopropylamine (DBAPA), la 1-(3-aminopropyl)-2-pyrolidine, la 3-morpholinopropylamine, la 1-(3-aminopropyl)pipéridine, la 1-(3-amino-propyl)pipécoline.

Les acides gras de formule (V) précédemment définis sont soit disponibles soit préparés selon des modes opératoires connus ou aisément adaptés de modes opératoires connus dans la littérature scientifique, dans la littérature brevets ou sur l'internet. Des exemples illustratifs d'acides gras de formule (V) adaptés au cadre de la présente invention comprennent, mais ne sont pas limités à, l'acide caprique, l'acide caprylique, l'acide palmitique, l'acide stéarique, l'acide oléique, l'acide linoléique, l'acide myristoléique, l'acide palmitoléique, l'acide linoléique, l'acide octanoïque, l'acide nonanoïque, l'acide décanoïque, l'acide undécanoïque, l'acide dodécanoïque, et l'acide octodécanoïque.

Comme déjà évoqué plus haut, un procédé tout à fait adapté pour la préparation des produits pour utilisation dans la présente invention comprend une première étape de mélange d'au moins un composé de formule (I) avec au moins un composé de formule (II), au moins un composé de formule (III) et au moins un composé de formule (V), tels que défini ci-dessus, puis une seconde étape de conduite d'une réaction de condensation par estérification entre les composés dans le mélange.

D'autres procédés encore permettent d'atteindre les composés utilisables dans le cadre de la présente invention, et par exemple les procédés dans lesquels les composés de formules (I), (II), (III) et (V) réagissent séquentiellement les uns après les autres, ou par groupes, dans tout ordre, selon les réactions chimiques qui s'opèrent, selon des conditions

opératoires bien connues de l'homme du métier.

Il est ainsi possible, par exemple de conduire une réaction de condensation par estérification entre des composés de formule (I), (II) et (III) dans un premier temps, et ensuite de conduire une autre réaction de condensation par estérification de ce produit de condensation avec un composé de formule (V) dans une étape ultérieure.

Plus généralement, les composés de formule (1) de la présente invention peuvent être préparés à partir de réaction(s) de condensation par estérification dans lesquelles au moins un composé de formule (I) et au moins un composé de formule (II) et au moins un composé de formule (III) et au moins un composé de formule (V) réagissent dans une ou plusieurs réaction(s) de condensation par estérification simultanées et/ou séquencées et/ou alternées.

La réaction de condensation par estérification se produisant entre les composés de formule (II) et de formule (I) et (III) est une réaction connue en tant que telle dans l'art antérieur. La réaction est de préférence conduite en présence d'un catalyseur d'estérification, tel qu'une base, par exemple une base de Brønsted, ou tel qu'un acide, par exemple un acide de Brønstedt ou un acide de Lewis, par exemple l'acide méthanesulfonique, l'acide paratoluènesulfonique, l'acide hypophosphorique, l'acide citrique ou le trifluorure de bore ($BF_3$).

Lorsqu'un dérivé d'acide dicarboxylique de formule (II), dans lequel D est O-$R^3$, est utilisé, la réaction est une transestérification qui, en variante, peut être conduite en présence d'un catalyseur alcalin. Selon encore d'autres variantes, différentes techniques conventionnelles connues de l'homme du métier peuvent être utilisées à partir d'autres dérivés d'acides dicarboxyliques, par exemple à partir de leurs anhydrides ou des chlorures d'acide correspondants.

Comme il apparaîtra à l'homme du métier, les différentes réactions d'estérification peuvent être conduites avec ou sans ajout de solvants. Si des solvants sont ajoutés et présents au cours de la réaction, ceux-ci sont généralement et avantageusement inertes vis-à-vis de la réaction d'estérification. Des solvants utilisables pour ces réactions d'estérification sont, à titres d'exemples non limitatifs, le toluène, le xylène, et autres.

Les réactions de condensation par estérification entre les composants (I), (II), (III) et (V) sont généralement conduites selon les conditions bien connues de l'homme du métier, et peuvent par exemple être conduites à une température comprise typiquement dans la plage de 60°C à 300°C, de préférence de 120°C à 280°C, et pendant une durée généralement comprise dans la plage de 1 heure à plusieurs heures, de préférence de 2 heures à 20 heures. Les réactions de condensation par estérification sont généralement conduites à pression atmosphérique, mais il est également possible d'opérer sous pression réduite, ou sous pression, par exemple à des pressions comprises entre 500 Pa et 20000 Pa.

Les ratios respectifs des composés de formules (I), (II), (III) et (V) peuvent varier dans de grandes proportions selon le ou les composé(s) final(finaux) souhaité(s) et les conditions opératoires mises en oeuvre. À titre d'exemple, et sans apporter aucune restriction limitante à l'invention, un mode de réalisation spécifique de la présente invention, met en oeuvre un rapport molaire entre les composés de formules (II) et les composés de formules (V) d'autre part, généralement compris entre 5:1 et 1:5, de préférence entre 3:1 et 1:3, et de préférence encore entre 3:1 et 1:1. Dans un autre mode de réalisation spécifique de la présente invention, le rapport molaire entre les composés de formules (I) et (V) est compris entre 6:1 et 1:6, de préférence entre 5:1 et 1:5, et de préférence encore entre 4:1 et 1:4.

Dans un autre mode de réalisation spécifique de la présente invention, le rapport molaire entre les composés de formules [(I) + (III)] et les composés de formule (II) est compris entre 6:1 et 1:6, de préférence entre 2:1 et 1:1, et de préférence encore entre 3:2 et 5 :4. Selon encore un autre mode de réalisation, le rapport molaire entre les composés de formules (I) et (III) est compris entre 15:1 et 1:15, de préférence entre 10:1 et 1:10, plus préférablement entre 4:1 et 1:4, de préférence encore entre 3:1 et 1:3.

Lorsqu'un produit quaternaire est souhaité, le procédé de préparation comprend avantageusement en outre au moins une étape constituée de l'ajout d'un agent d'alkylation au produit de de condensation et une étape de conduite de ladite réaction de quaternisation du produit de condensation, selon des techniques bien connues de l'homme du métier.

Ainsi, lorsque tous les indices t dans le composé de formule (1) sont égaux 0, ledit composé de formule (1) est un composé de polyesteramine tertiaire. Lorsque tous les indices t dans le composé de formule (1) sont égaux à 1, le composé de formule (1) est totalement quaternisé et est un composé de polyester polyammonium quaternaire, résultant de la quaternisation de la totalité des atomes d'azote présents dans le composé de formule (1) dans lequel les indices t sont égaux à 0. En variante, lorsqu'une partie seulement des indices t sont égaux à 0 et les autres indices t sont égaux à 1, le composé de formule (1) est un composé de polyesteramine partiellement quaternisé.

Comme indiqué précédemment, l'étape de réaction de quaternisation peut être réalisée selon toute méthode bien connue de l'homme du métier, généralement et le plus souvent à l'aide d'au moins un agent d'alkylation. Les agents d'alkylation préférés pour la réaction de quaternisation, partielle ou totale, peuvent ainsi être choisis avantageusement parmi les composés de formule $R^5X$, où $R^5$ et X sont tels que définis précédemment. Des exemples illustratifs de tels agents d'alkylation comprennent, sans volonté d'une quelconque limitation, le chlorure de méthyle, le bromure de méthyle, l'iodure de méthyle, le sulfate de diméthyle, le sulfate de diéthyle, le carbonate de diméthyle et le chlorure de benzyle. Selon un aspect tout particulièrement préféré, les agents d'alkylation sont choisis parmi le chlorure de méthyle, le sulfate de diméthyle, le sulfate de diéthyle et le chlorure de benzyle, ainsi que leurs mélanges, de préférence encore parmi le chlorure de méthyle, le sulfate de diméthyle et leurs mélanges.

Selon encore un autre mode de réalisation, la réaction de quaternisation peut être effectuée sur l'amine grasse de formule (I) et/ou sur le dérivé d'(alkyl)alcanolamine de formule (III), avant de conduire la ou les réaction(s) de condensation par estérification avec l'acide dicarboxylique ou un dérivé de celui-ci de formule (II). Selon encore d'autres modes de réalisation, la réaction de quaternisation peut être effectuée sur les composés intermédiaires obtenus pendant les réactions de condensation par estérification séquentielles ou alternées. Une ou plusieurs réaction(s) de quaternisation totale(s) ou partielle(s) peuvent être conduites après l'une quelconque de ces étapes intermédiaires.

Les réactions de quaternisation sont généralement conduites dans l'eau et/ou dans un ou des solvant(s) organique(s), tels que l'éthanol, l'isopropanol (IPA), l'éther monobutylique d'éthylène glycol, l'éther monobutylique de di(éthylène glycol) (BDG), le monoéthylène glycol (MEG), le diéthylène glycol (DEG), ou des mélanges de ceux-ci. Les solvants préférés sont choisis parmi l'isopropanol (IPA), l'éthanol, et leurs mélanges en toutes proportions.

La température de réaction de quaternisation peut varier dans de grandes proportions et est généralement comprise dans la plage allant de 20°C à 120°C, de préférence au moins 40°C, plus préférablement au moins 50°C et, de manière préférée entre toutes, au moins 55°C et, de préférence, au plus 90°C. La réaction de quaternisation est typiquement conduite pendant une durée dans la plage de plusieurs dizaines de minutes à plusieurs dizaines d'heures, de préférence d'une heure à 100 heures, plus préférablement dans une plage comprise entre 1 heure et 30 heures.

Comme déjà indiqué, la réaction de quaternisation peut être partielle ou totale. La progression de la réaction de quaternisation peut être suivie par tout moyen bien connu de l'homme du métier et par exemple en assurant le suivi de la diminution de l'alcalinité totale du milieu réactionnel. Une « quaternisation totale » est obtenue lorsque la valeur d'alcalinité totale est généralement inférieure ou égale à 0,2 meq/g, de préférence inférieure ou égale à 0,1 meq/g, plus préférablement inférieure ou égale à 0,05 meq/g telle que mesurée par titrage avec de l'acide chlorhydrique.

Dans un mode de réalisation, les composés de formule (1) préférés sont ceux dans lesquels une ou plusieurs, ou toutes les propositions suivantes sont respectées :

- $R_A$ et $R_B$ sont choisis dans le groupe constitué par les radicaux hydrocarbyle divalents ayant de 1 à 10, de préférence de 2 à 6, et de manière préférée entre toutes 4 atomes de carbone,
- $R^7$ est choisi parmi un radical hydrocarbyle ayant 1 à 4 atomes de carbone, de préférence 1 à 2 atomes de carbone et de manière préférée entre toutes $R^7$ représente méthyle,
- OA représente un radical éthoxy et
- $m_1$, $m_2$, $m_3$, $m_4$, $m_5$, $m_6$ $q_1$, $q_2$, t, $R^5$ sont tels que définis ci-dessus.

Selon un autre mode de réalisation, les composés de formule (1) préférés sont ceux dans lesquels tous les indices "t" sont égaux à 1, c'est-à-dire que tous les atomes d'azote sont quaternisés (ce qui signifie une « quaternisation totale »), tous les autres radicaux et entiers variables étant tels que définis ci-dessus.

Selon encore un autre mode de réalisation, les composés de formule (1) préférés sont ceux dans lesquels tous les indices "t" sont égaux à 1, et $R^5$ est choisi parmi méthyle et éthyle, tous les autres radicaux et entiers variables étant tels que définis ci-dessus.

Selon un autre mode de réalisation supplémentaire, les composés de formule (1) préférés sont ceux dans lesquels tous les indices "t" sont égaux à 1, $R^5$ est choisi parmi méthyle et éthyle, et X est choisi parmi les halogènes et les sulfates (par exemple, le méthosulfate), tous les autres radicaux et entiers variables étant tels que définis ci-dessus.

Dans un autre mode de réalisation, les composés de formule (1) préférés sont ceux dans lesquels tous les indices "t" sont égaux à 0, c'est-à-dire que tous les atomes d'azote ne sont pas quaternisés, tous les autres radicaux et entiers variables étant tels que définis ci-dessus.

Selon encore un autre mode de réalisation, les composés de formule (1) préférés sont ceux dans lesquels tous les indices "t" sont égaux à 0, et $R^5$ est choisi parmi méthyle et éthyle, tous les autres radicaux et entiers variables étant tels que définis ci-dessus.

Selon un autre mode de réalisation supplémentaire, les composés de formule (1) préférés sont ceux dans lesquels tous les indices "t" sont égaux à 0, $R^5$ est choisi parmi méthyle et éthyle, et X est choisi parmi les halogènes et les sulfates (par exemple, le méthosulfate), tous les autres radicaux et entiers variables étant tels que définis ci-dessus.

Selon un autre mode de réalisation, les composés de formule (1) préférés sont ceux dans lesquels chaque $m_1$, $m_2$, $m_3$, $m_4$, $m_5$ and $m_6$, indépendamment les uns des autres, sont identiques ou différents, et sont choisis parmi 1, 2, 3, 4, 5 et 6, et tous les autres radicaux variables et entiers sont tels que définis ci-dessus.

Selon un autre mode de réalisation préféré de la présente invention, les composés de formule (1) sont ceux obtenus par réaction(s) de condensation par estérification simultanée(s)/séquentielle(s)/alternée(s) de :

- au moins un composé de formule (I), dans lequel y = 0, $R^1$ est choisi parmi un radical hydrocarbyle ayant 8 à 24 atomes de carbone, de préférence 10 à 24, plus préférablement 12 à 24 atomes de carbone, et AO, m et n sont tels que définis précédemment,
- au moins un composé de formule (II),

- au moins un composé de formule (III), dans lequel $R^7$ est un radical hydrocarbyle ayant 1 à 7, de préférence 1 à 6 atomes de carbone, plus préférablement 1 à 4 atomes de carbone, et A"O, u et u' sont tels que définis précédemment, et
- au moins un composé de formule (V),

ainsi que leurs produits de réaction de quaternisation partielle ou totale.

Dans une mode de réalisation tout particulièrement préféré de l'invention, les composés de formule (1) préférés sont ceux obtenus par réaction(s) de condensation par estérification simultanée(s)/séquentielle(s)/alternée(s) de :

- au moins un composé de formule (I), dans lequel y = 0, et $R^1$ est choisi parmi un radical hydrocarbyle ayant 8 à 24 atomes de carbone, de préférence 10 à 24, plus préférablement 12 à 24 atomes de carbone, AO est éthoxy, et m et n sont tels que définis précédemment,
- au moins un composé de formule (II), et
- au moins un composé de formule (III), dans lequel $R^7$ représente un radical hydrocarbyle ayant de 1 à 7, de préférence de 1 à 6 atomes de carbone, plus préférablement de 1 à 4 atomes de carbone, A"O représente éthoxy, et u et u' sont tels que définis précédemment, et
- au moins un composé de formule (V),

ainsi que leurs produits de réaction de quaternisation partielle ou totale.

Selon un aspect tout particulièrement préféré, les composés de formule (1) de l'invention sont ceux obtenus par réaction(s) de condensation par estérification simultanée(s)/séquentielle(s)/alternée(s) de :

- au moins un composé de formule (I), dans lequel y = 0, $R^1$ représente un radical hydrocarbyle ayant de 8 à 24 atomes de carbone, de préférence de 10 à 24, plus préférablement de 12 à 24 atomes de carbone, AO est éthoxy, et m et n, chacun indépendamment l'un de l'autre, identiques ou différents, représentent un entier compris entre 1 et 10, de préférence entre 1 et 6, plus préférablement entre 1 et 5, limites incluses,
- au moins un composé de formule (II), choisi parmi des diacides (D représente -OH) et leurs anhydrides correspondants, dans lequel $R_A$ est un radical hydrocarbyle divalent ayant de 1 à 14, plus préférablement de 1 à 10, encore plus préférablement de 1 à 8 atomes de carbone, et
- au moins un composé de formule (III), dans lequel $R^7$ est un radical hydrocarbyle ayant de 1 à 7, de préférence de 1 à 6 atomes de carbone, plus préférablement de 1 à 4 atomes de carbone, A"O est éthoxy, et u et u' représentent chacun 1, et
- au moins un composé de formule (V), dans lequel $R^{11}$ est choisi parmi un radical hydrocarbyle ayant de 8 à 24 atomes de carbone, de préférence de 10 à 24, plus préférablement de 12 à 24 atomes de carbone et 0 ou 1 à 4 doubles liaisons.

ainsi que leurs produits de réaction de quaternisation totale avec le chlorure de méthyle.

Typiquement, les composés de formule (1) préférés sont ceux obtenus par réaction(s) de condensation par estérification simultanée(s)/séquentielle(s)/alternée(s) de :

- au moins un composé de formule (I) choisi parmi la n-octylamine, la n-décylamine, la n-dodécylamine, la (coco-alkyl)amine, la (huile de palme-alkyl)amine, la n-tétradécylamine, la n-hexadécylamine, la n-octadécylamine, l'oléylamine, la (suif-alkyl)amine, la (suif hydrogéné-alkyl)amine, la (colza-alkyl)amine, la (soja-alkyl)amine, l'érucylamine, alcoxylées avec 2 à 20, de préférence 2 à 10 OE (motifs oxyde d'éthylène), et/ou 2 à 20, de préférence 2 à 10 OP (motifs oxyde de propylène),
- au moins un composé de formule (II) choisi parmi l'acide malonique, l'acide succinique, l'acide glutarique, l'acide glutaconique, l'acide adipique, l'acide muconique, l'acide pimélique, l'acide phtalique et ses isomères, l'acide tétrahydrophtalique, l'acide malique, l'acide maléique, l'acide fumarique, l'acide subérique, l'acide mésaconique, l'acide sébacique, l'acide azélaïque, l'acide tartrique, l'acide itaconique, l'acide glutinique, l'acide citraconique, l'acide brassylique, l'acide dodécanedioïque, l'acide traumatique, l'acide thapsique, leurs chlorures d'acide correspondants, leurs esters méthyliques ou éthyliques correspondants, et leurs anhydrides cycliques correspondants, ainsi que des mélanges de ceux-ci, et
- au moins un composé de formule (III) choisi parmi la méthyldiéthanolamine, l'éthyldiéthanolamine, la propyldiéthanolamine, la butyldiéthanolamine, l'isobutyl-diéthanolamine, la pentyldiéthanolamine, l'hexyldiéthanolamine, l'heptyldiéthanol-amine, ainsi que leurs produits d'alcoxylation correspondants, et
- au moins un composé de formule (V), pouvant être par exemple et de manière non limitative choisi parmi l'acide caproïque, l'acide caprylique, l'acide laurique, l'acide myristique l'acide palmitique, l'acide stéarique, l'acide oléïque, l'acide linoléïque, l'acide linolénique, ainsi que leurs mélanges,

ainsi que leurs produits de réaction de quaternisation partielle ou totale.

Les composés de formule (1) les plus préférés selon la présente invention sont ceux obtenus par réaction(s) de condensation simultanée(s)/séquentielle(s)/alternée(s) par estérification de :

- au moins un composé de formule (I) choisi parmi la n-dodécylamine, les amines produites à partir des acides gras provenant d'huiles végétales ou de graisses animales, telles que huile de colza, huile de tournesol, huile de soja, huile de coco, huile de coprah, huile de palme, tall-oil, suif, et autres, et notamment la N-(coco)-N-méthyltriméthylènediamine, la N-(colza)-N-méthyl-triméthylènediamine, la N (soja)-N-méthyl-triméthylènediamine, la N-(suif)-N-méthyl-triméthylènediamine, la N-(suif hydrogéné)-N-méthyl-triméthylènediamine, et l'érucylamine, ces amines étant alcoxylées avec de 2 à 20, de préférence de 2 à 10 OE (motifs oxyde d'éthylène),
- au moins un composé de formule (II) choisi parmi l'acide malonique, l'acide succinique, l'acide glutarique, l'acide glutaconique, l'acide adipique, l'acide muconique, l'acide pimélique, l'acide phtalique et ses isomères, l'acide tétrahydrophtalique, l'acide malique, l'acide maléique, l'acide fumarique, l'acide subérique, l'acide mésaconique, l'acide sébacique, l'acide azélaïque, l'acide tartrique, l'acide itaconique, l'acide glutinique, l'acide citraconique, l'acide brassylique, l'acide dodécanedioïque, l'acide traumatique, l'acide thapsique, leurs chlorures d'acide correspondants, leurs esters méthyliques ou éthyliques correspondants, et leurs anhydrides cycliques correspondants, ainsi que des mélanges de ceux-ci, et
- au moins un composé de formule (III) choisi parmi la méthyldiéthanolamine, l'éthyldiéthanolamine, la propyldiéthanolamine, la butyldiéthanolamine, l'isobutyldiéthanolamine, la pentyldiéthanolamine, l'hexyldiéthanolamine, l'heptyldiéthanolamine, ainsi que leurs produits d'éthoxylation correspondants, et
- au moins un composé de formule (V), pouvant être par exemple et de manière non limitative choisi parmi l'acide caproïque, l'acide caprylique, l'acide laurique, l'acide myristique l'acide palmitique, l'acide stéarique, l'acide oléïque, l'acide linoléïque, l'acide linolénique, ainsi que leurs mélanges,

ainsi que leurs produits de réaction de quaternisation partielle ou totale.

De préférence encore, les composés de formule (1) selon la présente invention sont ceux obtenus par réaction(s) de condensation par estérification simultanée(s)/séquentielle(s)/alternée(s) de :

- au moins un composé de formule (I) choisi parmi la n-dodécylamine, les amines produites à partir des acides gras provenant d'huiles végétales ou de graisses animales, telles que huile de colza, huile de tournesol, huile de soja, huile de coco, huile de coprah, huile de palme, tall-oil, suif, et autres, et notamment la N-(coco)-N-méthyltriméthylènediamine, la N-(colza)-N-méthyl-triméthylènediamine, la N-(soja)-N-méthyl-triméthylènediamine, la N-(suif)-N-méthyl-triméthylènediamine, la N-(suif hydrogéné)-N-méthyl-triméthylènediamine, l'érucylamine, ces amines étant alcoxylées avec de 2 à 20, de préférence de 2 à 10 OE (motifs d'oxyde d'éthylène),
- au moins un composé de formule (II) choisi parmi l'acide malonique, l'acide succinique, l'acide glutarique, l'acide adipique, l'acide pimélique, l'acide maléique, l'acide fumarique, l'acide subérique, l'acide sébacique, l'acide azélaïque, l'acide brassylique, l'acide dodécanedioïque, leurs anhydrides cycliques correspondants, et
- au moins un composé de formule (III) choisi parmi la méthyldiéthanolamine, l'éthyldiéthanolamine, la propyldiéthanolamine, la butyldiéthanolamine, l'isobutyldi-éthanolamine, la pentyldiéthanolamine, l'hexyldiéthanolamine, l'heptyldiéthanolamine,
- au moins un composé de formule (V),

ainsi que leurs produits de réaction de quaternisation totale avec le chlorure de méthyle.

Les composés de formule (1) selon l'invention présentent de nombreux avantages, et parmi ces avantages, on peut notamment citer leur procédé de préparation relativement aisé à mettre en oeuvre, même à une échelle industrielle. En effet, la plupart des composés de formule (1) peuvent être préparés aisément à partir de matériaux de départ peu coûteux et aisément disponibles.

Les composés pouvant être obtenus de manière classique et aisée par exemple à partir d'au moins un composé formule (I) (comprenant son produit de quaternisation partielle ou totale) par condensation par estérification avec au moins une amine grasse alcoxylée de formule (I), avec au moins un acide dicarboxylique ou un dérivé de celui-ci, de formule (II), et avec au moins un dérivé d'(alkyl)alcanolamine de formule (III) (comprenant son produit de quaternisation partielle ou totale), et en outre avec au moins un acide gras de formule (V), et notamment le composé de formule (1) tel que défini ci-dessus et selon la présente invention, possèdent de nombreuses propriétés intéressantes.

En tant que tels, ces composés peuvent être utilisés dans de très nombreux domaines d'application, et notamment, à titre purement illustratif et sans aucune volonté de restriction quelconque, en tant qu'agents tensioactifs, biocides, agents anticorrosion, agents mouillant, et autres.

Plus particulièrement les composés selon la présente invention peuvent notamment être utilisés dans tout type d'industries du domaine de l'hygiène, de la cosmétique, de la détergence, de la santé humaine et animale, de l'agrochimie,

de l'industrie textile, de l'industrie minière, de l'industrie des engrais, de l'industrie du bitume, de la construction routière, de l'entretien des routes et de l'étanchéité, de l'industrie du traitement de l'eau et plus généralement des industries chimiques, pétrolières et gazières.

Parmi toutes les applications possibles, mention peut être faite des utilisations dans des compositions biocides, ou biostatiques, de leurs utilisations dans les industries minière, pétrolière et gazières, dans l'industrie des produits phytosanitaires, engrais en particulier, mais aussi dans les industries de la détergence, du nettoyage et dans la cosmétique.

Plus spécifiquement, ces composés, en tant que tels, obtenus par condensation par estérification d'au moins une amine grasse alcoxylée de formule (I) (comprenant son produit de quaternisation partielle ou totale), avec au moins un acide dicarboxylique, ou un dérivé de celui-ci, de formule (II), avec au moins un dérivé d'(alkyl)alcanolamine de formule (III) (comprenant son produit de quaternisation partielle ou totale), et avec au moins un acide gras de formule (V), et plus particulièrement le composé de formule (1) tel que défini ci-dessus sont généralement et le plus souvent dotés de fortes propriétés d'adsorption sur des surfaces minérales ou métalliques ou d'autres particules solides, mais aussi, grâce à leurs propriétés viscosifiantes ou plus généralement de contrôle rhéologique, émulsifiantes ou stabilisantes ou complexantes, ils peuvent être utiles pour l'industrie chimique en règle générale et notamment pour l'industrie liée à l'extraction et la récupération du pétrole et du gaz.

À ce titre, ils peuvent ainsi être avantageusement utilisés en tant qu'agents mouillants, agents anti-mottants, en tant que collecteurs pour l'enrichissement par flottation directe ou indirecte de minerais (à titre d'exemples non limitatifs pour l'enrichissement des carbonates, des phosphates, de la potasse, du feldspath, du quartz, du fer), en tant qu'inhibiteurs de corrosion, par exemple dans le domaine de la production de pétrole et de gaz, en tant que viscosificateurs, émulsifiants ou stabilisants ou complexants utiles pour l'industrie du pétrole et du gaz, par exemple en tant qu'agents désémulsifiants, anti-asphaltènes, en tant qu'agents antiagglomérant et/ou inhibiteurs cinétiques pour hydrates, notamment hydrates de gaz, en tant qu'agents anti-dépôts minéraux, tensioactifs pour améliorer la récupération de pétrole, tensioactifs pour une récupération de pétrole augmentée, tensioactifs pour fluides de fracturation, tensioactifs pour fluides d'acidification, tensioactifs pour améliorer l'injectivité de production et/ou d'eau de mer, tensioactifs pour améliorer la qualité d'eau de production, tensioactifs pour boues de forage, et autres.

Les composés de la présente invention précités peuvent également être utilisés en tant qu'additifs d'attaque acide de roche de phosphate, additifs pour engrais et additifs de traitement de surface ou interne de sels minéraux, modificateurs d'argile, dispersants, additifs de lubrification ou promoteurs d'adhérence, et dans l'industrie du bitume, en tant qu'additif pour le bitume, par exemple pour la fabrication d'émulsions de bitume, en tant qu'additifs d'émulsion de bitume.

D'autres utilisations encore sont possibles dans l'industrie de la détergence, du nettoyage, et en cosmétique, notamment en tant qu'additifs dans les produits de soins capillaires, en tant qu'assouplissants de tissus et textiles, en tant qu'agents antistatiques dans des polymères, ou d'additifs intervenant dans la réticulation pour des matières plastiques, en tant qu'agents cationiques de détergence, par exemple dans le domaine de la détergence industrielle, le lavage de voiture, en tant qu'agents hydrotropes, en tant qu'agents mouillants, en tant qu'additifs pour engrais, en tant qu'additifs de lubrification ou de travail des métaux, en tant qu'additif pour carburant, en tant que biocide, en tant que promoteurs d'adhérence, en tant qu'additif de traitement de l'eau, en tant qu'additif d'attaque acide de roches phosphatées, en tant qu'additif dispersant, en tant qu'additif de contrôle rhéologique, et autres.

L'invention apparaîtra plus clairement au moyen des exemples suivants, qui sont présentées à titre d'illustration uniquement, sans aucune intention de limiter la portée de la protection recherchée définie par les revendications annexées. Comme indiqué plus haut, dans l'ensemble de la description, des exemples et des revendications, toutes les plages de valeurs doivent être entendues comme étant « limites incluses » (c'est-à-dire que les limites sont incluses dans lesdites plages), sauf indication contraire spécifique.

**Méthodes de mesure**

Procédé de mesure d'indice d'acide :

Dans tous les exemples qui suivent, l'indice d'acide est mesuré par titrage potentiométrique en utilisant une solution d'hydroxyde de potassium en tant que réactif et l'alcool isopropylique en tant que solvant.

Dans un bécher de 250 mL, environ 10 g d'échantillon à analyser sont précisément pesés (Sw en g, précision au mg) et 70 mL d'alcool isopropylique sont ajoutés. Le mélange est agité et doucement chauffé, si nécessaire, pour obtenir un échantillon homogène. L'électrode de verre de référence combinée du titreur est introduite dans la solution, qui est ensuite agitée avec un agitateur magnétique. Le titrage acido-basique de l'échantillon est effectué en utilisant une solution aqueuse d'hydroxyde de potassium (KOH) 0,1 N et l'évolution du pH est enregistrée sur le titreur. Le point équivalent est déterminé graphiquement en utilisant des procédés connus de l'homme du métier, et le volume ($V_{KOH}$, en mL) de solution d'hydroxyde de potassium utilisé pour atteindre ce point est déterminé. L'indice d'acide (AV) est

ensuite obtenu selon le calcul suivant :

$$AV = \frac{[\text{Normalité de la solution de KOH (mol/L)}] \times 56{,}1 \times V_{KOH}}{Sw}$$

Procédé de mesure d'alcalinité totale :

Dans tous les exemples suivants, la valeur d'alcalinité totale est mesurée par titrage potentiométrique en utilisant une solution d'acide chlorhydrique en tant que réactif et l'alcool isopropylique est utilisé en tant que solvant.

Dans un bécher en polypropylène de 100 mL, environ 3 g d'échantillon à analyser sont précisément pesés (précision au mg, Sw en g) et 60 mL d'alcool isopropylique sont ajoutés. Le mélange est agité et doucement chauffé, si nécessaire, pour obtenir un échantillon homogène. Une fois que la température de la solution est revenue à température ambiante, l'électrode de verre de référence combinée du titreur est introduite dans la solution, qui est ensuite agitée avec un agitateur magnétique. Le titrage de l'échantillon est effectué en utilisant une solution d'acide chlorhydrique (HCl) 0,2 N de normalité précisément connue (N, en $m_{eq}.mL^{-1}$) l'évolution du pH est enregistrée sur le titreur. Le point équivalent est déterminé en utilisant des procédés connus de l'homme du métier, et le volume ($V_{HCl}$, en mL) de solution d'acide chlorhydrique utilisé pour atteindre ce point est déterminé. La valeur d'alcalinité totale (Alk), exprimée en meq $g^{-1}$, est ensuite obtenue selon le calcul suivant :

$$Alk = \frac{V_{HCl} * N}{Sw}$$

**EXEMPLE 1** : **synthèse du produit A (selon l'invention)**

Dans un ballon à fond rond de 4 L, sont introduits 715,6 g (4 moles) d'amine suif éthoxylée (2OE) fournie par by Arkema sous la marque Noramox® S2, 476,0 g (4 moles) de méthyldiéthanolamine (pureté > 99%) fournie par Taminco et 0,58 g d'une solution aqueuse à 50% en poids d'acide hypophosphoreux. Le mélange est chauffé à 80°C sous bullage d'azote. Le barbottage à l'azote est maintenu pendant toute la durée de l'essai. À température, 584,6 g (4 moles) d'acide adipique sont ensuite introduits sous agitation. Après 15 minutes, la température du mélange est chauffée pour atteindre 190°C à raison de 30°C/heure. La température de 190°C est maintenue jusqu'à ce que la quasi-totalité de l'acide soit consommé, soit jusqu'à atteindre un indice d'acide inférieur strictement à 5. Toujours à la température de 190°C ,1100 g (4 moles) d'acide gras suif sont ajoutés en 1 heure. Le mélange est maintenu à 190°C pendant 6 heures, puis à 200°C pendant 4 heures puis enfin refroidi pour récupérer 2616,11 g (poids en fin de réaction) d'un produit brut liquide de couleur orangé/marron contenant l'esteramine attendue, les amines n'ayant pas réagi, du diacide non réagi et de l'acide gras non réagi.

**EXEMPLE 2** : **Synthèse des produits B à K (selon l'invention)**

Suivant le même procédé que dans l'exemple 1, les produits suivants ont été préparés à partir des composes indiqués dans le Tableau 1 ci-dessous :

**Tableau 1 :** Composés et quantités utilisées pour la synthèse des composés B à K

| Amine grasse éthoxylée de formule (I) | Masse de (I) (en g) | Acide dicarboxylique de formule (II) | Masse de (II) (en g) | Dérivé (alkyl) alcanolamine de formule (III) | Masse de (III) (en g) | Dérivé d'acide gras de formule (V) | Masse de (V) (en g) | Produit |
|---|---|---|---|---|---|---|---|---|
| NoxS2 | 715,6 | Ac. Ad. | 876,8 | MDEA | 714,0 | AGS | 550,0 | B |
| NoxS2 | 715,6 | Ac. Ad. | 878,8 | MDEA | 714,0 | AGS | 1100,0 | C |
| NoxS2 | 536,7 | Ac. Ad. | 878,8 | MDEA | 714,0 | AGS | 825,0 | D |

| Amine grasse éthoxylée de formule (I) | Masse de (I) (en g) | Acide dicarboxylique de formule (II) | Masse de (II) (en g) | Dérivé (alkyl) alcanolamine de formule (III) | Masse de (III) (en g) | Dérivé d'acide gras de formule (V) | Masse de (V) (en g) | Produit |
|---|---|---|---|---|---|---|---|---|
| NoxS2 | 715,6 | Ac. Ad. | 584,6 | MDEA | 476,0 | AGS | 349,8 | E |
| NoxS2 | 715,7 | Ac. Ad. | 584,6 | MDEA | 476,0 | AGS | 708,3 | F |
| NoxS2 | 715,7 | Ac. Ad. | 584,6 | MDEA | 476,0 | AGS | 975,2 | G |
| NoxS2 | 715,6 | Ac. Ad. | 584,9 | MDEA | 476,0 | AGS | 766,3 | H |
| NoxS5 | 779,7 | Ac. Ad. | 701,9 | MDEA | 571,2 | AGS | 880,0 | I |
| NoxS5 | 923,7 | Ac. Ad. | 833,0 | MDEA | 678,3 | AGS | 522,7 | J |
| NoxS5 | 680,6 | Ac. Ad. | 818,4 | 666,4 | 571,20 | AGS | 770,0 | K |

- NoxS2 signifie amine suif éthoxylée (2OE) fournie par Arkema sous la marque Noramox® S2.
- NoxS5 signifie amine suif éthoxylée (5OE) fournie par Arkema sous la marque Noramox® S5.
- MDEA signifie méthyldiéthanolamine (grade de pureté > 99%) fournie par Taminco.
- Ac. Ad. signifie acide adipique.
- AGS signifie acide gras de suif.

**EXEMPLE 3** : **Synthèse d'un produit L (selon l'invention)**

Dans un réacteur en verre de 6 L, sont introduits 1799,33 g d'esteramine (produit A) obtenue dans l'exemple 1 avec 170,1 g d'alcool isopropylique. La quaternisation est réalisée sous pression maximale de 290 kPa en chlorure de méthyle. La température est maintenue entre 80°C et 85°C jusqu'à ce que la réaction soit complète, soit 18 heures.

La réaction est achevée lorsque l'alcalinité totale est égale ou inférieure à 0,2 meq.g$^{-1}$. La teneur en azote non quaternisé est alors inférieur ou égal à 2%. Le réacteur est ensuite refroidi à 65 °C et la pression ramenée à la pression atmosphérique. De l'azote est bullé pendant 2 heures dans le mélange avant récupération de 1909,0 g de produit L de réaction, brut, de couleur marron, contenant toujours 6,6% en poids d'alcool isopropylique.

**EXEMPLE 4 : Synthèse des produits M à S (selon l'invention)**

En suivant la même procédure que dans l'exemple 3, les produits dérivés de chlorométhyle ammonium quaternaire ont été préparés à partir des composés E à K préparés à l'exemple 2, comme indiqué dans le Tableau 2 ci-dessous:

**Tableau 2 :** Composés et quantités utilisées pour la synthèse des composés M à S

| **Produit réagi** | **Masse de produit (g)** | **Masse d'isopropanol (g)** | **Masse produit obtenu (g)** | **Isopropanol contenu dans le produit (%m)** | **Produit quaternisé** | **Temps de réaction (h)** | **Température de réaction (°C)** |
|---|---|---|---|---|---|---|---|
| E | 1573,7 | 298,9 | 1756,8 | 7,4% | M | 16 | 73 |
| F | 1671,9 | 290,4 | 1796,4 | 7,9% | N | 14 | 80 |
| G | 1824,8 | 368,0 | 2170,2 | 12,6% | O | 12 | 78 |
| H | 1793,0 | 360,2 | 2067,3 | 6,52% | P | 12 | 80 |
| I | 1668,6 | 200,28 | 1904,76 | 7,6% | Q | 12 | 80 |
| J | 1816,5 | 225,7 | 1987,1 | 14,32% | R | 10 | 82 |
| K | 1811,1 | 251,5 | 2121,2 | 18,71% | S | 11 | 85 |

## Revendications

1. Composé pouvant être obtenu par la condensation par estérification de :

A/ au moins une amine grasse alcoxylée de formule (I), ou du produit de quaternisation partielle ou totale de ladite amine grasse alcoxylée de formule (I) :

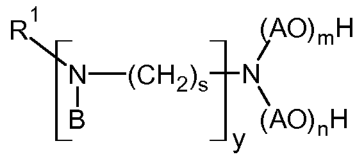

(I)

dans laquelle :

- $R^1$ est choisi parmi un radical hydrocarbyle ayant de 8 à 24 atomes de carbone, de préférence de 10 à 24, plus préférablement de 12 à 24 atomes de carbone, et un radical de formule $R^4$-O-$(A'O)_w$-T-, dans laquelle $R^4$ est un radical hydrocarbyle ayant de 8 à 24 atomes de carbone, de préférence de 10 à 24, plus préférablement de 12 à 24 atomes de carbone, w représente un entier compris entre 0 et 20, de préférence entre 0 et 10, plus préférablement entre 0 et 6, et encore plus préférablement entre 0 et 4, A'O représente un radical alkylénoxy contenant 2 à 4 atomes de carbone, de préférence 2 ou 3 atomes de carbone, plus préférablement 2 atomes de carbone ; T représente un radical alkylène contenant de 1 à 6 atomes de carbone, de préférence de 1 à 4 atomes de carbone, de manière préférée entre toutes à 2 ou à 3 atomes de carbone,
- AO est un radical alkylénoxy contenant de 2 à 4 atomes de carbone, de préférence à 2 ou à 3 atomes de carbone, plus préférablement à 2 atomes de carbone,
- B est choisi parmi un radical alkyle en $C_1$-$C_4$, un radical aryle, un radical arylalkyle, et un radical $(AO)_{m'}H$,

- n, m et m', identiques ou différents, représentent chacun indépendamment l'un de l'autre, un entier compris entre 1 et 20, de préférence entre 1 et 10, plus préférablement entre 1 et 6, et encore plus préférablement entre 1 et 4,
- s représente 1, 2 ou 3, de préférence 2 ou 3, et
- y est un entier allant de 0 à 5, de préférence de 0 à 3, plus préférablement y est 0 ou 1, encore plus préférablement y est 0,

B/ avec au moins un acide dicarboxylique, ou un dérivé de celui-ci, de formule (II) :

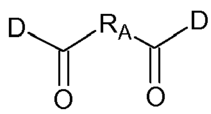

(II),

dans laquelle

- D est choisi parmi -F, -Cl, -Br et -O-$R^3$, où $R^3$ est choisi parmi hydrogène et un radical alkyle en $C_1$-$C_4$,
- $R_A$ est choisi dans le groupe constitué de :
  - une liaison directe,
  - une chaîne hydrocarbonée linéaire ou ramifiée, saturée ou insaturée en $C_1$-$C_{20}$ éventuellement substituée par un ou plusieurs radicaux -OH, de préférence un radical alkylène de formule $-(CH_2)_z-$, dans laquelle z est un entier de 1 à 20, de préférence de 1 à 10, de préférence de 2 à 6, et de manière préférée entre toutes 2 à 4, un radical alkylène substitué par 1 ou 2 radicaux -OH, un radical alcénylène ayant de 1 à 20, de préférence de 1 à 10 atomes de carbone, et éventuellement substitué par 1 ou 2 radicaux méthyle et/ou méthylène,
  - un radical cycloalkylène,
  - un radical cycloalcénylène et
  - un radical arylène,

C/ avec au moins un dérivé de (alkyl)alcanolamine de formule (III) ou du produit de quaternisation partielle ou totale dudit dérivé de (alkyl)alcanolamine de formule (III) :

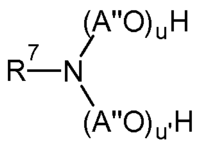

(III)

dans laquelle :

- A"O représente un radical alkylénoxy contenant de 2 à 4 atomes de carbone, de préférence 2 ou 3 atomes de carbone, plus préférablement 2 atomes de carbone,
- u représente un entier compris entre 1 et 20, de préférence entre 1 et 10, plus préférablement entre 1 et 6, et encore plus préférablement entre 1 et 4,
- u' représente un entier compris entre 1 et 20, de préférence entre 1 et 10, plus préférablement entre 1 et 6, et encore plus préférablement entre 1 et 4,
- $R^7$ est choisi parmi un radical hydrocarbyle ayant de 1 à 7, de préférence de 1 à 6 atomes de carbone, plus préférablement de 1 à 4 atomes de carbone, un radical aryle ou arylalkyle, un radical de formule H-$(OA")_v$- (dans laquelle v représente un entier compris entre 1 et 20, de préférence entre 1 et 10, plus préférablement entre 1 et 6, et encore plus préférablement entre 1 et 4), un radical $HO(CH_2)_q$-, où q représente un entier de 1 à 10, de préférence de 2 à 6, et de manière préférée entre toutes q est 2 ou 3, et un radical de formule (IV) suivante :

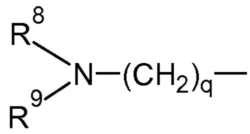

(IV),

- dans laquelle $R^8$ et $R^9$, identiques ou différents, sont choisis parmi un radical hydrocarbyle contenant de 1 à 6 atomes de carbone, de préférence de 1 à 4 atomes de carbone et q est un entier de 1 à 10, de préférence de 2 à 6, et de manière préférée entre toutes q est 2 ou 3,
- ou bien $R^8$ et $R^9$, conjointement avec l'atome d'azote auquel ils sont liés, forment un cycle à 5, 6 ou 7 sommets, comportant éventuellement un ou plusieurs hétéroatome(s) choisi(s) parmi oxygène, azote et soufre, et

D/ avec au moins un acide gras de formule (V) suivante :

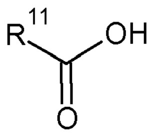

(V)

dans laquelle $R^{11}$ est choisi parmi un radical hydrocarbyle contenant de 8 à 24 atomes de carbone, de préférence de 10 à 24, plus préférablement de 12 à 24 atomes de carbone, et un radical de formule $R^4$-O-$(A'O)_w$-T-, dans laquelle A', $R^4$, T et w sont tels que définis précédemment.

**2.** Composé selon la revendication 1, dans lequel le radical $R^1$ de l'amine grasse de formule (I) comporte 8 ou plus de 8 atomes de carbone, typiquement de 8 à 24 atomes de carbone, de préférence de 10 à 24, plus préférablement de 12 à 24 atomes de carbone, et dans le dérivé de (alkyl)alcanolamine de formule (III), $R^7$ comporte 6 atomes de carbone ou moins, typiquement de 1 à 6 atomes de carbone, plus préférablement 1 à 4 atomes de carbone, limites incluses.

**3.** Composé selon la revendication 1 ou la revendication 2, dans lequel le radical $R^1$ et le radical $R^7$ de l'amine grasse de formule (I) et du dérivé de (alkyl)alcanolamine de formule (III) respectivement, sont tels que la différence de nombre d'atomes de carbone qu'ils comportent est supérieur à 2, typiquement de 2 à 23, de préférence 5 à 23, plus préférablement 10 à 23, limites incluses.

**4.** Composé selon l'une quelconque des revendications précédentes, dans lequel une partie ou la totalité des atomes d'azote réagissent en outre avec un réactif de formule $R^5X$, dans laquelle $R^5$ est choisi parmi un radical hydrocarbyle en $C_1$-$C_6$, de préférence un radical alkyle en $C_1$-$C_4$, aryle et arylalkyle, et X est un groupe partant quelconque connu de l'homme du métier et, de préférence, X est généralement choisi parmi les halogènes, les sulfates, les carbonates et les sulfonates.

**5.** Composé selon l'une des revendications précédentes, dans lequel, l'amine grasse alcoxylée de formule (I) est l'amine grasse alcoxylée de formule (IA) :

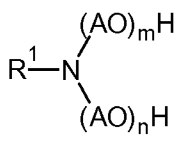

(IA)

qui est l'amine grasse alcoxylée de formule (I) dans laquelle y représente 0, et $R^1$, AO, m et n sont tels que définis dans la revendication 1,
ainsi que ses dérivés partiellement ou totalement quaternisés correspondants.

**6.** Composé selon l'une des revendications précédentes, dans lequel le dérivé d'(alkyl)alcanolamine de formule (III) est le dérivé d'(alkyl)alcanolamine de formule (IIIA) :

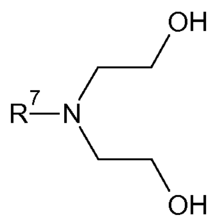

(IIIA)

qui est l'(alkyl)alcanolamine de formule (III) dans laquelle u et u' représentent chacun 1, A"O est éthylènoxy et $R^7$ est tel que défini dans la revendication 1, et est de préférence un radical hydrocarbyle ayant 1 à 4 atomes de carbone,
ainsi que ses dérivés partiellement ou totalement quaternisés correspondants.

**7.** Composé selon l'une des revendications précédentes, dans lequel le dérivé d'acide dicarboxylique de formule (II) est choisi parmi un acide dicarboxylique, un halogénure d'acide dicarboxylique, un diester d'un acide dicarboxylique, et un anhydride cyclique d'un acide dicarboxylique.

**8.** Composé selon l'une des revendications précédentes, dans lequel des exemples de dérivés d'acide dicarboxylique de formule (II) comprennent l'acide oxalique, l'acide malonique, l'acide succinique, l'acide glutarique, l'acide glutaconique, l'acide adipique, l'acide muconique, l'acide pimélique, l'acide phtalique et ses isomères, l'acide tétrahydrophtalique, l'acide malique, l'acide maléique, l'acide fumarique, l'acide subérique, l'acide mésaconique, l'acide sébacique, l'acide azélaïque, l'acide tartrique, l'acide itaconique, l'acide glutinique, l'acide citraconique, l'acide brassylique, l'acide dodécanedioïque, l'acide traumatique, l'acide thapsique, leurs chlorures d'acide correspondants, leurs esters méthyliques ou éthyliques correspondants, et leurs anhydrides cycliques correspondants, l'anhydride phtalique, ainsi que des mélanges de ceux-ci.

**9.** Composé selon l'une des revendications précédentes, dans lequel le rapport molaire entre les composés de formules [(I) + (III)] et les composés de formule (II) est compris entre 6:1 et 1:6, de préférence entre 2:1 et 1:1, et de préférence encore entre 3:2 et 5:4.

**10.** Composé selon l'une des revendications précédentes, dans lequel le rapport molaire entre les composés de formules (I) et (III) est compris entre 15:1 et 1:15, de préférence entre 10:1 et 1:10, plus préférablement entre 4:1 et 1:4, de préférence encore entre 3:1 et 1:3.

**11.** Composé selon l'une des revendications précédentes, dans lequel le rapport molaire entre les composés de formules (I) et (V) est compris entre 6:1 et 1:6, de préférence entre 5:1 et 1:5, et de préférence encore entre 4:1 et 1:4.

**12.** Composé pouvant être obtenu par la condensation par estérification de l'amine grasse alcoxylée de formule (I), avec l'acide dicarboxylique ou un dérivé de celui-ci, de formule (II), avec un dérivé de (alkyl)alcanolamine de formule (III), et avec l'acide gras de formule (V) tels que définis dans la revendication 1, le dit composé répondant à la formule générale (1) :

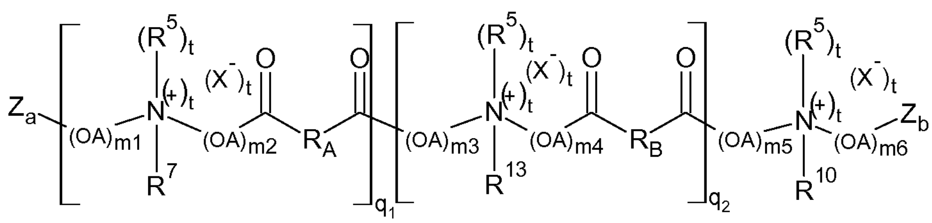

(1)

dans laquelle :

- $R^5$ est choisi parmi un radical hydrocarbyle en $C_1$-$C_6$, de préférence un radical alkyle en $C_1$-$C_4$, aryle et arylalkyle, et X est choisi parmi les halogènes, les sulfates, les carbonates, et les sulfonates et autres,
- t représente 0 ou 1, étant entendu que les indices « t », indépendamment les uns des autres, présents dans la formule peuvent être identiques ou différents,

- $Z_a$ et $Z_b$, identiques ou différents, sont chacun choisis parmi un atome d'hydrogène, un radical -(C=O)-$R_A$-(C=O)OH, un radical -(C=O)-$R_B$-(C=O)OH et un radical -(C=O)$R^{11}$, avec la condition qu'au moins un des deux groupes $Z_a$ et $Z_b$ est un radical -(C=O)$R^{11}$,
- $R^{11}$ est choisi parmi un radical hydrocarbyle contenant de 8 à 24 atomes de carbone, de préférence de 10 à 24, plus préférablement de 12 à 24 atomes de carbone, et un radical de formule $R^4$-O-(A'O)$_w$-T-, dans laquelle dans laquelle $R^4$ est un radical hydrocarbyle ayant 8 à 24 atomes de carbone, de préférence 12 à 24 atomes de carbone, w représente un entier compris entre 0 et 20, de préférence entre 0 et 10, plus préférablement entre 0 et 6, et encore plus préférablement entre 0 et 4, A'O représente un radical alkylénoxy contenant 2 à 4 atomes de carbone, de préférence 2 ou 3 atomes de carbone, plus préférablement 2 atomes de carbone ; et T représente un radical alkylène comportant de 1 à 6 atomes de carbone, de préférence de 1 à 4 atomes de carbone, de manière préférée entre toutes 2 ou 3 atomes de carbone,
- $R_A$ et $R_B$, identiques ou différents, sont choisis indépendamment l'un de l'autre parmi :

• une liaison directe,
• une chaîne hydrocarbonée linéaire ou ramifiée, saturée ou insaturée en $C_1$-$C_{20}$ facultativement substituée par un ou plusieurs radicaux -OH, de préférence un radical alkylène de formule -$(CH_2)_z$-, dans laquelle z est un entier de 1 à 20, de préférence de 1 à 10, de préférence de 2 à 6, et de manière préférée entre toutes de 4, un radical alkylène substitué, ledit radical alkylène étant substitué par 1 ou 2 radicaux -OH, un radical alcénylène ayant de 1 à 20, de préférence de 1 à 10 atomes de carbone, un radical alcénylène substitué, ledit radical alcénylène étant substitué par 1 ou 2 radicaux méthyle et/ou méthényle,
• un radical cycloalkylène,
• un radical cycloalcénylène, et
• un radical arylène.

- $q_1$ et $q_2$, identiques ou différents, représentent chacun un entier compris entre 0 et 15, de préférence entre 0 et 10, plus préférablement entre 0 et 5, étant entendu que :

* la somme $q_1$+$q_2$ est différent de 0, et
* lorsque $q_1$ est nul alors $R^{10}$et $R^7$ sont identiques, et
* lorsque $q_2$ est nul alors $R^{10}$ et $R^{13}$ sont identiques, et
* les motifs répétitifs présents $q_1$ fois et $q_2$ fois peuvent être arrangés de manière aléatoire, alternée, statistique, séquencée ou par blocs,

- OA représente un radical alkylénoxy contenant de 2 à 4 atomes de carbone, de préférence 2 ou 3 atomes de carbone, plus préférablement 2 atomes de carbone, sachant que tous les radicaux OA présents dans le composé de formule (1) sont chacun, indépendamment les uns des autres, identiques ou différents,
- $m_1$, $m_2$, $m_3$, $m_4$, $m_5$ et $m_6$, identiques ou différents, et indépendamment les uns des autres, représentent chacun un entier compris entre 1 et 20, de préférence entre 1 et 10, plus préférablement entre 1 et 6, et encore plus préférablement entre 1 et 5,
- chaque radical $R^{13}$, indépendamment l'un de l'autre, représente $R^1$ ou un radical $R^{12}$-$(G)_y$-, où y est un entier allant de 0 à 5, de préférence de 0 à 3, plus préférablement y est 0 ou 1, encore plus préférablement y est 0,
- $R^{10}$ représente $R^{13}$ ou $R^7$,
- $R^7$ est choisi parmi un radical hydrocarbyle ayant 1 à 7, de préférence 1 à 6 atomes de carbone, plus préférablement 1 à 4 atomes de carbone, un radical aryle ou arylalkyle (par exemple, un radical phényle ou naphtyle), un radical de formule H-(OA")$_v$- (dans laquelle v représente un entier compris entre 1 et 20, de préférence entre 1 et 10, plus préférablement entre 1 et 6, et encore plus préférablement entre 1 et 4, limites incluses, et OA" représente un radical alkylénoxy contenant de 2 à 4 atomes de carbone, de préférence 2 ou 3 atomes de carbone, plus préférablement 2 atomes de carbone), HO$(CH_2)_q$-, où q représente un entier de 1 à 10, de préférence de 2 à 6, et de manière préférée entre toutes q est 2 ou 3, et un radical de formule (2) :

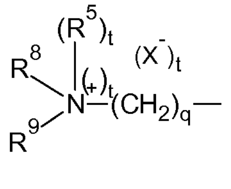

(2)

dans laquelle $R^5$, X et t sont tels que définis ci-dessus, et $R^8$ et $R^9$, identiques ou différents, sont choisis parmi

un radical hydrocarbyle ayant 1 à 6 atomes de carbone, de préférence 1 à 4 atomes de carbone et q est un entier de 1 à 10, de préférence de 2 à 6, limites incluses, et de manière préférée entre toutes q est 2 ou 3, ou bien $R^8$ et $R^9$, conjointement avec l'atome d'azote auquel ils sont liés, forment un cycle à 5, 6 ou 7 sommets, comportant facultativement un ou plusieurs hétéroatome(s) choisi(s) parmi oxygène, azote et soufre,
- $R^{12}$ est choisi parmi un radical hydrocarbyle ayant 8 à 24 atomes de carbone, de préférence 10 à 24, plus préférablement 12 à 24 atomes de carbone, et un radical de formule $R^4$-O-(A'O)$_w$-T-, dans laquelle $R^4$, A'O, w et T sont tels que définis ci-dessus,
- $R^1$ est choisi parmi un radical hydrocarbyle ayant de 8 à 24 atomes de carbone, de préférence de 10 à 24, plus préférablement de 12 à 24 atomes de carbone, et un radical de formule $R^4$-O-(A'O)$_w$-T-, dans laquelle $R^4$, A'O, w et T sont tels que définis ci-dessus,
- G représente un radical de formule (3) :

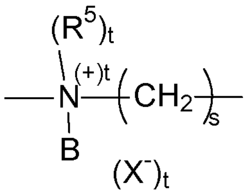

(3)

dans laquelle :

- $R^5$, X et t sont tels que définis ci-dessus,
- B est choisi parmi les radicaux alkyle en $C_1$-$C_4$, aryle et arylalkyle, et
- s représente 1, 2 ou 3, de préférence 2 ou 3,

étant entendu que si plusieurs variables de même dénomination sont présentes dans le composé de formule (1), celles-ci peuvent être identiques ou différentes, indépendamment les unes des autres.

**13.** Composé selon la revendication 12, dans lequel une ou plusieurs, ou toutes les propositions suivantes sont respectées :

- $R_A$ et $R_B$ sont choisis dans le groupe constitué par les radicaux hydrocarbyle divalents ayant de 1 à 10, de préférence de 2 à 6, et de manière préférée entre toutes 4 atomes de carbone,
- $R^7$ est choisi parmi un radical hydrocarbyle ayant 1 à 4 atomes de carbone, de préférence 1 à 2 atomes de carbone et de manière préférée entre toutes $R^7$ représente méthyle,
- OA représente un radical éthoxy, et
- les autres variables m1, m2, m3, m4, m5, m6 q1, q2, t, R5 étant comme définies dans la revendication 12.

**14.** Composé selon la revendication 12 ou la revendication 13, dans lequel tous les indices "t" sont égaux à 1.

**15.** Composé selon l'une quelconque des revendications 12 à 14, obtenu à partir de la ou les réaction(s) de condensation par estérification simultanée(s) / séquentielle(s) / alternée(s) de :

- au moins un composé de formule (I), dans lequel y = 0, $R^1$ est choisi parmi un radical hydrocarbyle ayant 8 à 24 atomes de carbone, de préférence 10 à 24, plus préférablement 12 à 24 atomes de carbone,
- au moins un composé de formule (II),
- au moins un composé de formule (III), dans lequel $R^7$ est un radical hydrocarbyle ayant 1 à 7, de préférence 1 à 6 atomes de carbone, plus préférablement 1 à 4 atomes de carbone, et
- au moins un composé de formule (V),

ainsi que leurs produits de réaction de quaternisation partielle ou totale.

**16.** Utilisation d'un composé selon l'une quelconque des revendications 1 à 15 en tant qu'agent tensioactif, biocide, agent anticorrosion, agent mouillant, agent détergent, agent émulsifiant, agent désémulsionant, agent anti asphaltène, agent biostatique, agent anti agglomérant, agent anti mottant, agent anti statique, agent collecteur, agent complexant, agent de contrôle rhéologique, agent hydrotrope, agent dispersant, agent d'adhérence, agent lubrifiant, agent réticulant, agent inhibiteur cinétique, agent stabilisant, dans les domaines de l'hygiène, de la cosmétique, de

la détergence, de la santé humaine et animale, de l'agrochimie, de l'industrie textile, de l'industrie minière, de l'industrie des engrais, de l'industrie du bitume, de la construction routière, de l'entretien des routes et de l'étanchéité, de l'industrie du traitement de l'eau, de l'industrie des plastiques, de l'industrie des carburants, de l'industrie des lubrifiants, de l'industrie du travail des métaux, et plus généralement des industries chimiques, pétrolières et gazières.

## Patentansprüche

**1.** Verbindung, die durch die Kondensation durch Veresterung des Folgenden erhältlich ist:

A) mindestens eines alkoxylierten Fettamins der Formel (I) oder des Produkts einer partiellen oder vollständigen Quaternisierung des alkoxylierten Fettamins der Formel (I):

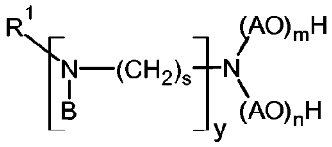

(I),

wobei:

- $R^1$ ausgewählt ist aus einem Kohlenwasserstoffrest mit 8 bis 24 Kohlenstoffatomen, vorzugsweise 10 bis 24, stärker bevorzugt 12 bis 24 Kohlenstoffatomen, und einem Rest der Formel $R^4$-O-$(A'O)_w$-T-, wobei $R^4$ ein Kohlenwasserstoffrest mit 8 bis 24 Kohlenstoffatomen, vorzugsweise 10 bis 24 Kohlenstoffatomen, stärker bevorzugt 12 bis 24 Kohlenstoffatomen, ist, w eine ganze Zahl zwischen 0 und 20, vorzugsweise zwischen 0 und 10, stärker bevorzugt zwischen 0 und 6 und noch mehr bevorzugt zwischen 0 und 4, darstellt, A'O einen Alkylenoxyrest darstellt, der 2 bis 4 Kohlenstoffatome, vorzugsweise 2 oder 3 Kohlenstoffatome, stärker bevorzugt 2 Kohlenstoffatome, enthält; T einen Alkylenrest darstellt, der 1 bis 6 Kohlenstoffatome, vorzugsweise 1 bis 4 Kohlenstoffatome, am meisten bevorzugt 2 oder 3 Kohlenstoffatome, enthält,
- AO ein Alkylenoxyrest ist, der 2 bis 4 Kohlenstoffatome, vorzugsweise 2 oder 3 Kohlenstoffatome, stärker bevorzugt 2 Kohlenstoffatome, enthält,
- B aus einem $C_1$-$C_4$-Alkylrest, einem Arylrest, einem Arylalkylrest und einem $(AO)_{m'}H$-Rest ausgewählt ist,
- n, m und m', die gleich oder verschieden sind, jeweils unabhängig voneinander eine ganze Zahl zwischen 1 und 20, vorzugsweise zwischen 1 und 10, stärker bevorzugt zwischen 1 und 6 und noch mehr bevorzugt zwischen 1 und 4, darstellen,
- s 1, 2 oder 3, vorzugsweise 2 oder 3, darstellt, und
- y eine ganze Zahl von 0 bis 5, vorzugsweise von 0 bis 3, ist, y stärker bevorzugt 0 oder 1 ist, y noch mehr bevorzugt 0 ist,

B) mit mindestens einer Dicarbonsäure oder einem Derivat davon der Formel (II):

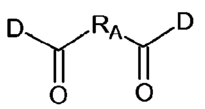

(II),

wobei

- D aus -F, -Cl, -Br und -O-$R^3$ ausgewählt ist, wobei $R^3$ aus Wasserstoff und einem $C_1$-$C_4$-Alkylrest ausgewählt ist,
- $R_A$ ausgewählt ist aus der Gruppe bestehend aus:
  - einer direkten Bindung,
  - einer gesättigten oder ungesättigten, linearen oder verzweigten $C_1$-$C_{20}$-Kohlenwasserstoffkette, die gegebenenfalls durch einen oder mehrere -OH-Reste substituiert ist, vorzugsweise einem Alkylenrest der Formel $-(CH_2)_z-$, wobei z eine ganze Zahl von 1 bis 20, vorzugsweise von 1 bis 10, vorzugsweise

von 2 bis 6 und am meisten bevorzugt zwischen 2 und 4, ist, einem durch 1 oder 2 -OH-Reste substituierten Alkylenrest, einem Alkenylenrest, der 1 bis 20, vorzugsweise 1 bis 10 Kohlenstoffatome aufweist und gegebenenfalls durch 1 oder 2 Methyl- und/oder Methylenreste substituiert ist,

◦ einem Cycloalkylenrest,
◦ einem Cycloalkenylenrest und
◦ einem Arylenrest,

C) mit mindestens einem (Alkyl)Alkanolaminderivat der Formel (III) oder dem Produkt einer partiellen oder vollständigen Quaternisierung des (Alkyl)Alkanolamin-derivats der Formel (III):

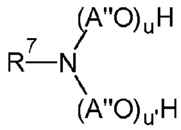

(III),

wobei:

- A"O einen Alkylenoxyrest darstellt, der 2 bis 4 Kohlenstoffatome, vorzugsweise 2 oder 3 Kohlenstoffatome, stärker bevorzugt 2 Kohlenstoffatome, enthält,
- u eine ganze Zahl zwischen 1 und 20, vorzugsweise zwischen 1 und 10, stärker bevorzugt zwischen 1 und 6 und noch mehr bevorzugt zwischen 1 und 4, darstellt,
- u' eine ganze Zahl zwischen 1 und 20, vorzugsweise zwischen 1 und 10, stärker bevorzugt zwischen 1 und 6 und noch mehr bevorzugt zwischen 1 und 4, darstellt,
- $R^7$ ausgewählt ist aus einem Kohlenwasserstoffrest mit 1 bis 7, vorzugsweise 1 bis 6 Kohlenstoffatomen, stärker bevorzugt 1 bis 4 Kohlenstoffatomen, einem Aryl-oder Arylalkylrest, einem Rest der Formel $H-(OA")_v$-(wobei v eine ganze Zahl zwischen 1 und 20, vorzugsweise zwischen 1 und 10, stärker bevorzugt zwischen 1 und 6 und noch mehr bevorzugt zwischen 1 und 4 darstellt), einem Rest $HO(CH_2)_q$-, wobei q eine ganze Zahl von 1 bis 10, vorzugsweise von 2 bis 6, darstellt und q am meisten bevorzugt 2 oder 3 ist, und einem Rest der folgenden Formel (IV):

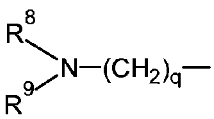

(IV),

wobei $R^8$ und $R^9$, die gleich oder verschieden sein können, aus einem Kohlenwasserstoffrest ausgewählt sind, der 1 bis 6 Kohlenstoffatome, vorzugsweise 1 bis 4 Kohlenstoffatome, enthält, und q eine ganze Zahl von 1 bis 10, vorzugsweise 2 bis 6, ist, und wobei q am meisten bevorzugt 2 oder 3 ist,

- oder $R^8$ und $R^9$ zusammen mit dem Stickstoffatom, mit dem sie verbunden sind, einen 5-, 6- oder 7-gliedrigen Ring bilden, der gegebenenfalls ein oder mehrere aus Sauerstoff, Stickstoff oder Schwefel ausgewählte Heteroatome umfasst, und

D) mit mindestens einer Fettsäure der folgenden Formel (V):

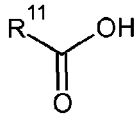

(V),

wobei $R^{11}$ aus einem Kohlenwasserstoffrest, der 8 bis 24 Kohlenstoffatome, vorzugsweise 10 bis 24, stärker bevorzugt 12 bis 24 Kohlenstoffatome, enthält, und einem Rest der Formel $R^4-O-(A'O)_w-T-$ ausgewählt ist, wobei A', $R^4$, T und w wie zuvor definiert sind.

**2.** Verbindung nach Anspruch 1, wobei der Rest $R^1$ des Fettamins der Formel (I) 8 oder mehr als 8 Kohlenstoffatome,

typischerweise 8 bis 24 Kohlenstoffatome, vorzugsweise 10 bis 24, stärker bevorzugt 12 bis 24 Kohlenstoffatome, umfasst, und wobei das (Alkyl)Alkanolaminderivat der Formel (III), $R^7$, 6 Kohlenstoffatome oder weniger, typischerweise 1 bis 6 Kohlenstoffatome, stärker bevorzugt 1 bis 4 Kohlenstoffatome, umfasst, Grenzwerte eingeschlossen.

**3.** Verbindung nach Anspruch 1 oder Anspruch 2, wobei der Rest $R^1$ bzw. der Rest $R^7$ des Fettamins der Formel (I) bzw. des (Alkyl)Alkanolaminderivats der Formel (III) derart sind, dass der Unterschied der Zahl von Kohlenstoffatomen, die sie umfassen, größer als 2, typischerweise von 2 bis 23, vorzugsweise von 5 bis 23, stärker bevorzugt von 10 bis 23, beträgt, Grenzwerte eingeschlossen.

**4.** Verbindung nach einem der vorhergehenden Ansprüche, wobei ein Teil oder die Gesamtheit der Stickstoffatome außerdem mit einem Reagens der Formel $R^5X$ reagiert, wobei $R^5$ aus einem $C_1$-$C_6$-Kohlenwasserstoffrest, vorzugsweise einem $C_1$-$C_4$-Alkyl-, Aryl- und Arylalkylrest, ausgewählt ist und X eine beliebige dem Fachmann bekannte Abgangsgruppe ist und X vorzugsweise im Allgemeinen aus Halogenen, Sulfaten, Carbonaten und Sulfonaten ausgewählt ist.

**5.** Verbindung nach einem der vorhergehenden Ansprüche, wobei das alkoxylierte Fettamin der Formel (I) das alkoxylierte Fettamin Formel (IA):

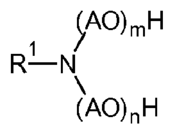

(IA),

bei dem es sich um das alkoxylierte Fettamin der Formel (I) handelt, wobei y 0 darstellt und $R^1$, AO, m und n wie in Anspruch 1 definiert sind,
sowie deren entsprechende teilweise oder vollständig quaternisierte Derivate ist.

**6.** Verbindung nach einem der vorhergehenden Ansprüche, wobei das (Alkyl)Alkanolaminderivat der Formel (III) das (Alkyl)Alkanolaminderivat der Formel (IIIA):

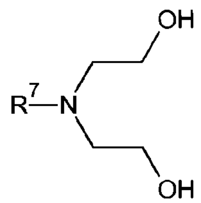

(IIIA),

bei dem es sich um das (Alkyl)Alkanolamin der Formel (III) handelt, wobei u und u' jeweils 1 darstellen, A"O Ethylenoxy ist und $R^7$ wie in Anspruch 1 definiert ist, und vorzugsweise ein Kohlenwasserstoffrest mit 1 bis 4 Kohlenstoffatomen ist,
sowie deren entsprechende teilweise oder vollständig quaternisierte Derivate ist.

**7.** Verbindung nach einem der vorhergehenden Ansprüche, wobei das Dicarbonsäurederivat der Formel (II) aus einer Dicarbonsäure, einem Dicarbonsäurehalogenid, einem Dicarbonsäurediester und einem cyclischen Anhydrid einer Dicarbonsäure ausgewählt ist.

**8.** Verbindung nach einem der vorhergehenden Ansprüche, wobei Beispiele von Dicarbonsäurederivaten der Formel (II) Oxalsäure, Malonsäure, Bernsteinsäure, Glutarsäure, Glutaconsäure, Adipinsäure, Muconsäure, Pimelinsäure, Phthalsäure und deren Isomere, Tetrahydrophthalsäure, Äpfelsäure, Maleinsäure, Fumarsäure, Korksäure, Mesaconsäure, Sebacinsäure, Azelainsäure, Weinsäure, Itaconsäure, Glutinsäure, Citraconsäure, Brassylsäure, Dodecandisäure, Traumatinsäure, Thapsiasäure, deren entsprechende Säurechloride, deren entsprechende Methyl- oder Ethylester und deren entsprechende cyclische Anhydride, Phthalsäureanhydrid sowie Mischungen davon umfassen.

**9.** Verbindung nach einem der vorhergehenden Ansprüche, wobei das Stoffmengenverhältnis zwischen den Verbindungen der Formeln [(I) + (III)] und den Verbindungen der Formel (II) zwischen 6:1 und 1:6, vorzugsweise zwischen 2:1 und 1:1 und noch mehr bevorzugt zwischen 3:2 und 5:4, beträgt.

**10.** Verbindung nach einem der vorhergehenden Ansprüche, wobei das Stoffmengenverhältnis zwischen den Verbindungen der Formeln (I) und (III) zwischen 15:1 und 1:15, vorzugsweise zwischen 10:1 und 1:10, stärker bevorzugt zwischen 4:1 und 1:4 und noch mehr bevorzugt zwischen 3:1 und 1:3, beträgt.

**11.** Verbindung nach einem der vorhergehenden Ansprüche, wobei das Stoffmengenverhältnis zwischen den Verbindungen der Formeln (I) und (V) zwischen 6:1 und 1:6, vorzugsweise zwischen 5:1 und 1:5 und noch mehr bevorzugt zwischen 4:1 und 1:4, beträgt.

**12.** Verbindung, die durch die Kondensation durch Veresterung des alkoxylierten Fettamins der Formel (I) mit der Dicarbonsäure oder einem Derivat davon der Formel (II), mit einem (Alkyl)Alkanolaminderivat der Formel (III) und mit der Fettsäure der Formel (V) gemäß der Definition in Anspruch 1 erhältlich ist, wobei die Verbindung der allgemeinen Formel (1) entspricht:

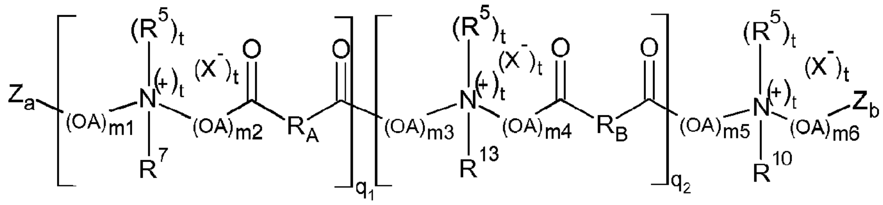

(1)

wobei:

- $R^5$ aus einem $C_1$-$C_6$-Kohlenwasserstoffrest, vorzugsweise einem $C_1$-$C_4$-Alkyl-, Aryl- und Arylalkylrest, ausgewählt ist und X aus Halogenen, Sulfaten, Carbonaten und Sulfonaten und anderen ausgewählt ist,
- t 0 oder 1 darstellt, unter der Bedingung, dass die in der Formel vorhandenen Indices "t" unabhängig voneinander gleich oder verschieden sein können,
- $Z_a$ und $Z_b$, die gleich oder verschieden sein können, jeweils aus einem Wasserstoffatom, einem -(C=O)-$R_A$-(C=O)OH-Rest, einem - (C=O)-$R_B$-(C=O)OH-Rest und einem - (C=O)$R^{11}$-Rest ausgewählt sind, mit der Maßgabe, dass mindestens eine der zwei Gruppen $Z_a$ und $Z_b$ ein -(C=O)$R^{11}$-Rest ist,
- $R^{11}$ ausgewählt ist aus einem Kohlenwasserstoffrest, der 8 bis 24 Kohlenstoffatome, vorzugsweise 10 bis 24, stärker bevorzugt 12 bis 24 Kohlenstoffatome, enthält, und einem Rest der Formel $R^4$-O- $(A'O)_w$-T-, wobei $R^4$ ein Kohlenwasserstoffrest mit 8 bis 24 Kohlenstoffatomen, vorzugsweise 12 bis 24 Kohlenstoffatomen, ist, w eine ganze Zahl zwischen 0 und 20, vorzugsweise zwischen 0 und 10, stärker bevorzugt zwischen 0 und 6 und noch mehr bevorzugt zwischen 0 und 4, darstellt, A'O einen Alkylenoxyrest darstellt, der 2 bis 4 Kohlenstoffatome, vorzugsweise 2 oder 3 Kohlenstoffatome, stärker bevorzugt 2 Kohlenstoffatome, enthält; und T einen Alkylenrest darstellt, der 1 bis 6 Kohlenstoffatome, vorzugsweise 1 bis 4 Kohlenstoffatome, am meisten bevorzugt 2 oder 3 Kohlenstoffatome, umfasst,
- $R_A$ und $R_B$, die gleich oder verschieden sein können, unabhängig voneinander ausgewählt sind aus:

  • einer direkten Bindung,
  • einer gesättigten oder ungesättigten, linearen oder verzweigten $C_1$-$C_{20}$-Kohlenwasserstoffkette, die gegebenenfalls durch einen oder mehrere -OH-Reste substituiert ist, vorzugsweise einem Alkylenrest der Formel $-(CH_2)_z-$, wobei z eine ganze Zahl von 1 bis 20, vorzugsweise von 1 bis 10, vorzugsweise von 2 bis 6 und am meisten bevorzugt 4, ist, einem substituierten Alkylenrest, wobei der Alkylenrest durch 1 oder 2 -OH-Reste substituiert ist, einem Alkenylenrest mit 1 bis 20, vorzugsweise 1 bis 10 Kohlenstoffatomen, einem substituierten Alkenylenrest, wobei der Alkenylenrest durch 1 oder 2 Methyl- und/oder Methylenreste substituiert ist,
  • einem Cycloalkylenrest,
  • einem Cycloalkenylenrest und
  • einem Arylenrest,

- $q_1$ und $q_2$, die gleich oder verschieden sein können, jeweils eine ganze Zahl zwischen 0 und 15, vorzugsweise zwischen 0 und 10, stärker bevorzugt zwischen 0 und 5, darstellen, unter der Bedingung, dass:

* die Summe $q_1+q_2$ von 0 verschieden ist und
* wenn $q_1$ null ist, $R^{10}$ und $R^7$ gleich sind und
* wenn $q_2$ null ist, $R^{10}$ und $R^{13}$ gleich sind und
* die $q_1$-mal und $q_2$-mal vorhandenen Repetiereinheiten zufällig, alternierend, statistisch, sequentiell oder in Blöcken angeordnet sein können,

- OA einen Alkylenoxyrest darstellt, der 2 bis 4 Kohlenstoffatome, vorzugsweise 2 oder 3 Kohlenstoffatome, stärker bevorzugt 2 Kohlenstoffatome, enthält, wobei alle in der Verbindung der Formel (1) vorhandenen OA-Reste jeweils unabhängig voneinander gleich oder verschieden sind,
- $m_1$, $m_2$, $m_3$, $m_4$, $m_5$ und $m_6$ gleich oder verschieden sind und unabhängig voneinander jeweils eine ganze Zahl zwischen 1 und 20, vorzugsweise zwischen 1 und 10, stärker bevorzugt zwischen 1 und 6 und noch mehr bevorzugt zwischen 1 und 5, darstellen,
- jeder Rest $R^{13}$ unabhängig voneinander $R^1$ oder einen $R^{12}$-$(G)_y$-Rest darstellt, wobei y eine ganze Zahl von 0 bis 5, vorzugsweise von 0 bis 3, ist, y stärker bevorzugt 0 oder 1 ist, y noch mehr bevorzugt 0 ist,
- $R^{10}$ $R^{13}$ oder $R^7$ darstellt,
- $R^7$ ausgewählt ist aus einem Kohlenwasserstoffrest mit 1 bis 7, vorzugsweise 1 bis 6 Kohlenstoffatomen, stärker bevorzugt 1 bis 4 Kohlenstoffatomen, einem Aryl-oder Arylalkylrest (beispielsweise einem Phenyl- oder Naphthylrest), einem Rest der Formel H-$(OA")_v$- (wobei v eine ganze Zahl zwischen 1 und 20, vorzugsweise zwischen 1 und 10, stärker bevorzugt zwischen 1 und 6 und noch mehr bevorzugt zwischen 1 und 4 darstellt, Grenzwerte eingeschlossen), und OA" einen Alkylenoxyrest darstellt, der 2 bis 4 Kohlenstoffatome, vorzugsweise 2 oder 3 Kohlenstoffatome, stärker bevorzugt 2 Kohlenstoffatome, enthält, $HO(CH_2)_q$-, wobei q eine ganze Zahl von 1 bis 10, vorzugsweise von 2 bis 6, darstellt und q am meisten bevorzugt 2 oder 3 ist, und einem Rest der Formel (2):

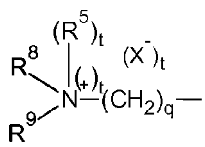

(2) ,

wobei $R^5$, X und t wie vorstehend definiert sind und $R^8$ und $R^9$, die gleich oder verschieden sein können, ausgewählt sind aus einem Kohlenwasserstoffrest mit 1 bis 6 Kohlenstoffatomen, vorzugsweise 1 bis 4 Kohlenstoffatomen, und q eine ganze Zahl von 1 bis 10, vorzugsweise von 2 bis 6, ist, Grenzwerte eingeschlossen, und q am meisten bevorzugt 2 oder 3 ist oder $R^8$ und $R^9$ zusammen mit dem Stickstoffatom, mit dem sie verbunden sind, einen 5-, 6- oder 7-gliedrigen Ring bilden, der gegebenenfalls ein oder mehrere aus Sauerstoff, Stickstoff oder Schwefel ausgewählte Heteroatome umfasst,
- $R^{12}$ aus einem Kohlenwasserstoffrest mit 8 bis 24 Kohlenstoffatomen, vorzugsweise 10 bis 24, stärker bevorzugt 12 bis 24 Kohlenstoffatomen, und einem Rest der Formel $R^4$-O-$(A'O)_w$-T- ausgewählt ist, wobei $R^4$, A'O, w und T wie zuvor definiert sind,
- $R^1$ aus einem Kohlenwasserstoffrest mit 8 bis 24 Kohlenstoffatomen, vorzugsweise 10 bis 24, stärker bevorzugt 12 bis 24 Kohlenstoffatomen, und einem Rest der Formel $R^4$-O-$(A'O)_w$-T- ausgewählt ist, wobei $R^4$, A'O, w und T wie zuvor definiert sind,
- G einen Rest der Formel (3):

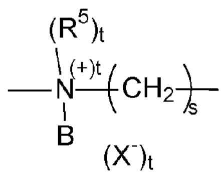

(3)

darstellt, wobei:

- $R^5$, X und t wie zuvor definiert sind,
- B aus $C_1$-$C_4$-Alkyl-, Aryl- und Arylalkylresten ausgewählt ist, und
- s 1, 2 oder 3, vorzugsweise 2 oder 3, darstellt,

unter der Bedingung, dass, wenn mehrere Variablen mit derselben Bezeichnung in der Verbindung der Formel (1) vorhanden sind, diese unabhängig voneinander gleich oder verschieden sein können.

**13.** Verbindung nach Anspruch 12, wobei eine oder mehrere oder alle der folgenden Aussagen zutreffen:

- $R_A$ und $R_B$ sind ausgewählt aus der Gruppe bestehend aus zweiwertigen Kohlenwasserstoffresten mit 1 bis 10, vorzugsweise 2 bis 6 und am meisten bevorzugt 4 Kohlenstoffatomen,
- $R^7$ ist ausgewählt aus einem Kohlenwasserstoffrest mit 1 bis 4 Kohlenstoffatomen, vorzugsweise 1 bis 2 Kohlenstoffatomen, und am meisten bevorzugt stellen alle $R^7$ Methyl dar,
- OA stellt einen Ethoxyrest dar und
- die anderen Variablen m1, m2, m3, m4, m5, m6, q1, q2, t, R5 sind wie in Anspruch 12 definiert.

**14.** Verbindung nach Anspruch 12 oder Anspruch 13, wobei alle Indices "t" gleich 1 sind.

**15.** Verbindung nach einem der Ansprüche 12 bis 14, die durch die gleichzeitige(n) / aufeinanderfolgende(n) / abwechselnde(n) Kondensationsreaktion(en) durch Veresterung von Folgendem erhalten wird:

- mindestens einer Verbindung der Formel (I), wobei y = 0, $R^1$ aus einem Kohlenwasserstoffrest mit 8 bis 24 Kohlenstoffatomen, vorzugsweise 10 bis 24, stärker bevorzugt 12 bis 24 Kohlenstoffatomen, ausgewählt ist,
- mindestens einer Verbindung der Formel (II),
- mindestens einer Verbindung der Formel (III), wobei $R^7$ ein Kohlenwasserstoffrest mit 1 bis 7, vorzugsweise 1 bis 6 Kohlenstoffatomen, stärker bevorzugt 1 bis 4 Kohlenstoffatomen, ist, und
- mindestens einer Verbindung der Formel (V),

sowie den Produkten einer partiellen oder vollständigen Quaternisierungsreaktion davon.

**16.** Verwendung einer Verbindung nach einem der Ansprüche 1 bis 15 als Tensid, Biozid, Korrosionsschutzmittel, Benetzungsmittel, Detergens, Emulgator, Demulgator, Antiasphalten-Mittel, Biostatikum, Fließfähigmacher, Antiklumpmittel, Antistatikum, Kollektor, Komplexbildner, Rheologieregler, Hydrotropiermittel, Dispergiermittel, Haftvermittler, Gleitmittel, Vernetzungsmittel, kinetischer Inhibitor, Stabilisator, auf den Gebieten der Hygiene, der Kosmetik, der Reinigungsmittel, der menschlichen und der Tiergesundheit, der Agrochemie, der Textilindustrie, der Bergbauindustrie, der Düngemittelindustrie, der Bitumenindustrie, des Straßenbaus, der Straßeninstandhaltung und der Abdichtung, der Wasseraufbereitungsindustrie, der Kunststoffindustrie, der Kraftstoffindustrie, der Schmierstoffindustrie, der metallverarbeitenden Industrie und ganz allgemein der chemischen, der Erdöl-und der Gasindustrie.

## Claims

**1.** Compound obtainable by esterification condensation of:

A/ at least one alkoxylated fatty amine of formula (I), or the product of partial or total quaternization of said alkoxylated fatty amine of formula (I):

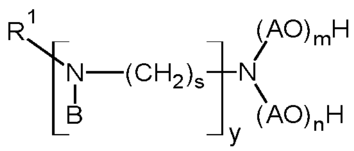

(I)

in which:

- $R^1$ is chosen from a hydrocarbyl radical having from 8 to 24 carbon atoms, preferably from 10 to 24 and more preferably from 12 to 24 carbon atoms, and a radical of formula $R^4$-O-(A'O)$_w$-T-, in which $R^4$ is a hydrocarbyl radical having from 8 to 24 carbon atoms, preferably from 10 to 24 and more preferably from 12 to 24 carbon atoms, w represents an integer of between 0 and 20, preferably between 0 and 10, more preferably between 0 and 6 and even more preferably between 0 and 4, A'O represents an alkylenoxy radical containing 2 to 4 carbon atoms, preferably 2 or 3 carbon atoms, more preferably 2 carbon atoms,

and T represents an alkylene radical containing from 1 to 6 carbon atoms, preferably from 1 to 4 carbon atoms and most preferably with 2 or 3 carbon atoms,
- AO is an alkylenoxy radical containing from 2 to 4 carbon atoms, preferably with 2 or 3 carbon atoms, more preferably with 2 carbon atoms,
- B is chosen from a $C_1$-$C_4$ alkyl radical, an aryl radical, an arylalkyl radical, and a radical $(AO)_{m'}H$,
- n, m and m', which are identical or different, represent each independently of one another an integer between 1 and 20, preferably between 1 and 10, more preferably between 1 and 6 and even more preferably between 1 and 4,
- s represents 1, 2 or 3, preferably 2 or 3, and
- y is an integer ranging from 0 to 5, preferably from 0 to 3, more preferably y is 0 or 1, even more preferably y is 0,

B/ with at least one dicarboxylic acid, or a derivative thereof, of formula (II):

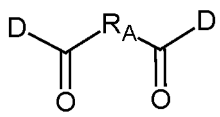
(II),

in which

- D is chosen from -F, -Cl, -Br and -0-R3, in which $R^3$ is chosen from hydrogen and a $C_1$-$C_4$ alkyl radical,
- $R_A$ is chosen from the group consisting of:
  - ◦ a direct bond,
  - ◦ a linear or branched, saturated or unsaturated $C_1$-$C_{20}$ hydrocarbon chain optionally substituted by one or more -OH radicals, preferably an alkylene radical of formula $-(CH_2)_z-$, in which z is an integer from 1 to 20, preferably from 1 to 10, preferably from 2 to 6 and most preferably 2 to 4, an alkylene radical being substituted by 1 or 2 -OH radicals, an alkenylene radical having from 1 to 20, preferably from 1 to 10 carbon atoms, and optionally substituted by 1 or 2 methyl and/or methylene radicals,
  - ◦ a cycloalkylene radical,
  - ◦ a cycloalkenylene radical, and
  - ◦ an arylene radical,

C/ with at least one (alkyl)alkanolamine derivative of formula (III) or the product of partial or total quaternization of said (alkyl)alkanolamine derivative of formula (III):

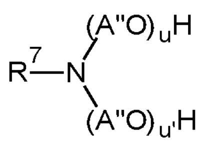
(III)

in which:

- A"O represents an alkylenoxy radical containing from 2 to 4 carbon atoms, preferably 2 or 3 carbon atoms, more preferably 2 carbon atoms,
- u represents an integer between 1 and 20, preferably between 1 and 10, more preferably between 1 and 6, and even more preferably between 1 and 4,
- u' represents an integer between 1 and 20, preferably between 1 and 10, more preferably between 1 and 6, and even more preferably between 1 and 4,
- $R^7$ is chosen from a hydrocarbyl radical having from 1 to 7, preferably from 1 to 6 carbon atoms, more preferably from 1 to 4 carbon atoms, an aryl or arylalkyl radical, a radical of formula $H-(OA")_v-$ (in which v represents an integer between 1 and 20, preferably between 1 and 10, more preferably between 1 and 6, and even more preferably between 1 and 4), a radical $HO(CH_2)_q-$, in which q represents an integer from 1 to 10, preferably from 2 to 6, and most preferably q is 2 or 3, and a radical of formula (IV) as follows:

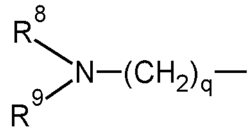

(IV),

- in which $R^8$ and $R^9$, which are identical or different, are chosen from a hydrocarbyl radical containing from 1 to 6 carbon atoms, preferably from 1 to 4 carbon atoms, and q is an integer from 1 to 10, preferably from 2 to 6, and most preferably q is 2 or 3,
- or else $R^8$ and $R^9$, together with the nitrogen atom to which they are attached, form a 5-, 6- or 7-membered ring, optionally including one or more heteroatom(s) chosen from oxygen, nitrogen and sulfur, and

D/ with at least one fatty acid of formula (V) as follows:

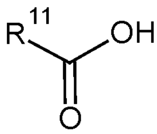

(V)

in which $R^{11}$ is chosen from a hydrocarbyl radical containing from 8 to 24 carbon atoms, preferably from 10 to 24, more preferably from 12 to 24 carbon atoms, and a radical of formula $R^4$-O-(A'O)$_w$-T-, in which A', $R^4$, T and w are as defined above.

2. Compound according to Claim 1, in which the radical $R^1$ of the fatty amine of formula (I) includes 8 or more than 8 carbon atoms, typically from 8 to 24 carbon atoms, preferably from 10 to 24, more preferably from 12 to 24 carbon atoms, and $R^7$ in the (alkyl)alkanolamine derivative of formula (III) includes 6 carbon atoms or less, typically from 1 to 6 carbon atoms, more preferably 1 to 4 carbon atoms, limits included.

3. Compound according to Claim 1 or Claim 2, in which the radical $R^1$ and the radical $R^7$ of the fatty amine of formula (I) and of the (alkyl)alkanolamine derivative of formula (III), respectively, are such that the difference in the number of carbon atoms they include is greater than 2, typically from 2 to 23, preferably 5 to 23, more preferably 10 to 23, limits included.

4. Compound according to any one of the preceding claims, in which some or all of the nitrogen atoms also react with a reactant of formula $R^5X$, in which $R^5$ is chosen from a $C_1$-$C_6$ hydrocarbyl radical, preferably a $C_1$-$C_4$ alkyl, aryl and arylalkyl radical, and X is any leaving group known to a person skilled in the art, and preferably X is generally chosen from halogens, sulfates, carbonates, and sulfonates.

5. Compound according to one of the preceding claims, in which the alkoxylated fatty amine of formula (I) is the alkoxylated fatty amine of formula (IA):

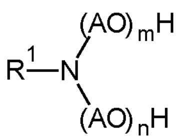

(IA)

which is the alkoxylated fatty amine of formula (I) in which y represents 0 and $R^1$, AO, m and n are as defined in Claim 1,
and also the corresponding partially or totally quaternized derivatives thereof.

6. Compound according to one of the preceding claims, in which the (alkyl)alkanolamine derivative of formula (III) is the (alkyl)alkanolamine derivative of formula (IIIA):

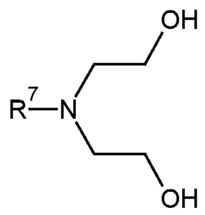

(IIIA)

which is the (alkyl)alkanolamine of formula (III) in which u and u' each represent 1, A"O is ethylenoxy and $R^7$ is as defined in Claim 1, and is preferably a hydrocarbyl radical having 1 to 4 carbon atoms,
and also the corresponding partially or totally quaternized derivatives thereof.

**7.** Compound according to one of the preceding claims, in which the dicarboxylic acid derivative of formula (II) is chosen from a dicarboxylic acid, a dicarboxylic acid halide, a dicarboxylic acid diester and a cyclic anhydride of a dicarboxylic acid.

**8.** Compound according to one of the preceding claims, in which examples of dicarboxylic acid derivatives of formula (II) comprise oxalic acid, malonic acid, succinic acid, glutaric acid, glutaconic acid, adipic acid, muconic acid, pimelic acid, phthalic acid and isomers thereof, tetrahydrophthalic acid, malic acid, maleic acid, fumaric acid, suberic acid, mesaconic acid, sebacic acid, azelaic acid, tartaric acid, itaconic acid, glutinic acid, citraconic acid, brassylic acid, dodecanedioic acid, traumatic acid, thapsic acid, the corresponding acid chlorides thereof, the corresponding methyl or ethyl esters thereof, and the corresponding cyclic anhydrides thereof, phthalic anhydride, and also mixtures thereof.

**9.** Compound according to one of the preceding claims, in which the molar ratio of the compounds of formulae [(I) + (III)] to the compounds of formula (II) is between 6:1 and 1:6, preferably between 2:1 and 1:1, and more preferably between 3:2 and 5:4.

**10.** Compound according to one of the preceding claims, in which the molar ratio between the compounds of formulae (I) and (III) is between 15:1 and 1:15, preferably between 10:1 and 1:10, more preferably between 4:1 and 1:4 and even more preferably between 3:1 and 1:3.

**11.** Compound according to one of the preceding claims, in which the molar ratio between the compounds of formulae (I) and (V) is between 6:1 and 1:6, preferably between 5:1 and 1:5, and more preferably between 4:1 and 1:4.

**12.** Compound obtainable by esterification condensation of the alkoxylated fatty amine of formula (I) with the dicarboxylic acid or a derivative thereof of formula (II), with an (alkyl)alkanolamine derivative of formula (III), and with the fatty acid of formula (V) as defined in Claim 1, said compound corresponding to the general formula (1):

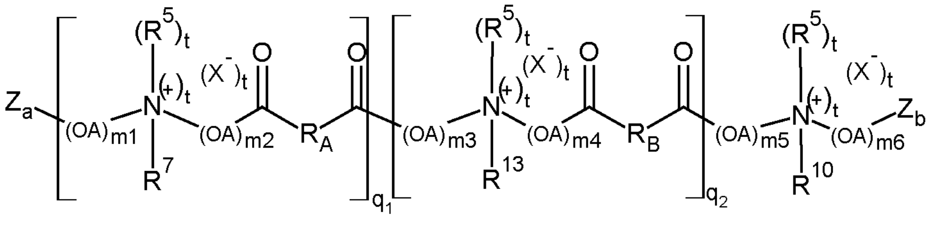

(1)

in which:

- $R^5$ is chosen from a $C_1$-$C_6$ hydrocarbyl radical, preferably a $C_1$-$C_4$ alkyl, aryl and arylalkyl radical, and X is chosen from halogens, sulfates, carbonates, and sulfonates and others,
- t represents 0 or 1, with the proviso that the indices "t", independently of one another, which are present in the formula may be identical or different,
- $Z_a$ and $Z_b$, which are identical or different, are each chosen from a hydrogen atom, a radical -(C=O)-$R_A$-(C=O)OH, a radical -(C=O)-$R_B$-(C=O)OH and a radical - (C=O)$R^{11}$, with the condition that at least one of the two groups $Z_a$ and $Z_b$ is a radical -(C=O)$R^{11}$,

- $R^{11}$ is chosen from a hydrocarbyl radical containing from 8 to 24 carbon atoms, preferably from 10 to 24 and more preferably from 12 to 24 carbon atoms, and a radical of formula $R^4$-O-(A'O)$_w$-T-, in which $R^4$ is a hydrocarbyl radical having 8 to 24 carbon atoms, preferably 12 to 24 carbon atoms, w represents an integer between 0 and 20, preferably between 0 and 10, more preferably between 0 and 6 and even more preferably between 0 and 4, A'O represents an alkylenoxy radical containing 2 to 4 carbon atoms, preferably 2 or 3 carbon atoms, more preferably 2 carbon atoms, and T represents an alkylene radical containing from 1 to 6 carbon atoms, preferably from 1 to 4 carbon atoms and most preferably 2 or 3 carbon atoms,
- $R_A$ and $R_B$, which are identical or different, are chosen independently of one another from:

    • a direct bond,
    • a linear or branched, saturated or unsaturated $C_1$-$C_{20}$ hydrocarbon chain optionally substituted by one or more -OH radicals, preferably an alkylene radical of formula $-(CH_2)_z-$, in which z is an integer from 1 to 20, preferably from 1 to 10, preferably from 2 to 6 and most preferably 4, a substituted alkylene radical, said alkylene radical being substituted by 1 or 2 -OH radicals, an alkenylene radical having from 1 to 20, preferably from 1 to 10 carbon atoms, a substituted alkenylene radical, said alkenylene radical being substituted by 1 or 2 methyl and/or methenyl radicals,
    • a cycloalkylene radical,
    • a cycloalkenylene radical, and
    • an arylene radical,

- $q_1$ and $q_2$, which are identical or different, each represent an integer between 0 and 15, preferably between 0 and 10, more preferably between 0 and 5, with the proviso that:

    * the sum $q_1+q_2$ is other than 0, and
    * when $q_1$ is zero, $R^{10}$ and $R^7$ are identical, and
    * when $q_2$ is zero, $R^{10}$ and $R^{13}$ are identical, and
    * the repeating units present $q_1$ times and $q_2$ times may be arranged at random, in alternation, statistically, sequentially or in blocks,

- OA represents an alkylenoxy radical containing from 2 to 4 carbon atoms, preferably 2 or 3 carbon atoms, more preferably 2 carbon atoms, on the condition that all the radicals OA present in the compound of formula (1) are each independently of one another identical or different,
- $m_1$, $m_2$, $m_3$, $m_4$, $m_5$ and $m_6$, which are identical or different, independently of one another each represent an integer between 1 and 20, preferably between 1 and 10, more preferably between 1 and 6, and even more preferably between 1 and 5,
- each radical $R^{13}$, independently of one another, represents $R^1$ or a radical $R^{12}$-(G)$_y$-, in which y is an integer ranging from 0 to 5, preferably from 0 to 3, more preferably y is 0 or 1, even more preferably y is 0,
- $R^{10}$ represents $R^{13}$ or $R^7$,
- $R^7$ is chosen from a hydrocarbyl radical having 1 to 7, preferably 1 to 6 carbon atoms, more preferably 1 to 4 carbon atoms, an aryl or arylalkyl radical (for example, a phenyl or naphthyl radical), a radical of formula H-(OA")$_v$- (in which v represents an integer between 1 and 20, preferably between 1 and 10, more preferably between 1 and 6, and even more preferably between 1 and 4, limits included, and OA" represents an alkylenoxy radical containing from 2 to 4 carbon atoms, preferably 2 or 3 carbon atoms, more preferably 2 carbon atoms), $HO(CH_2)_q-$, where q represents an integer from 1 to 10, preferably from 2 to 6, and most preferably q is 2 or 3, and a radical of formula (2):

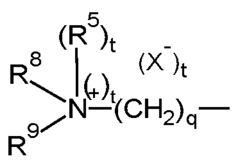

(2)

in which $R^5$, X and t are as defined above, and $R^8$ and $R^9$, which are identical or different, are chosen from a hydrocarbyl radical having 1 to 6 carbon atoms, preferably 1 to 4 carbon atoms, and q is an integer from 1 to 10, preferably from 2 to 6, limits included, and most preferably q is 2 or 3, or else $R^8$ and $R^9$, together with the nitrogen atom to which they are attached, form a 5-, 6- or 7-membered ring, optionally including one or more heteroatoms chosen from oxygen, nitrogen and sulfur,

- $R^{12}$ is chosen from a hydrocarbyl radical having 8 to 24 carbon atoms, preferably 10 to 24, more preferably 12 to 24 carbon atoms, and a radical of formula $R^4$-O-(A'O)$_w$-T-, in which $R^4$, A'O, w and T are as defined above,
- $R^1$ is chosen from a hydrocarbyl radical having from 8 to 24 carbon atoms, preferably from 10 to 24, more preferably from 12 to 24 carbon atoms, and a radical of formula $R^4$-O-(A'O)$_w$-T-, in which $R^4$, A'O, w and T are as defined above,
- G represents a radical of formula (3):

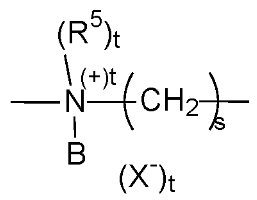

(3)

in which:

- $R^5$, X and t are as defined above,
- B is chosen from $C_1$-$C_4$ alkyl, aryl and arylalkyl radicals, and
- s represents 1, 2 or 3, preferably 2 or 3,

with the proviso that if there are several variables with the same name present in the compound of formula (1), they may be identical or different, independently of one another.

**13.** Compound according to Claim 12, in which one or more, or all, of the following propositions are respected:

- $R_A$ and $R_B$ are chosen from the group consisting of divalent hydrocarbyl radicals having from 1 to 10, preferably from 2 to 6 and most preferably 4 carbon atoms,
- $R^7$ is chosen from a hydrocarbyl radical having 1 to 4 carbon atoms, preferably 1 to 2 carbon atoms and most preferably $R^7$ represents methyl,
- OA represents an ethoxy radical, and
- the other variables m1, m2, m3, m4, m5, m6, q1, q2, t and R5 are as defined in Claim 12.

**14.** Compound according to Claim 12 or Claim 13, in which all the indices "t" are equal to 1.

**15.** Compound according to any one of Claims 12 to 14, which is obtained from the simultaneous/sequential/alternating esterification condensation reaction(s) of:

- at least one compound of formula (I), in which y = 0, $R^1$ is chosen from a hydrocarbyl radical having 8 to 24 carbon atoms, preferably 10 to 24, more preferably 12 to 24 carbon atoms,
- at least one compound of formula (II),
- at least one compound of formula (III), in which $R^7$ is a hydrocarbyl radical having 1 to 7, preferably 1 to 6 carbon atoms, more preferably 1 to 4 carbon atoms, and
- at least one compound of formula (V),

and also the products of the partial or total quaternization reaction thereof.

**16.** Use of a compound according to any one of Claims 1 to 15 as a surfactant, biocide, corrosion inhibitor, wetting agent, detergent, emulsifier, demulsifier, antiasphaltene agent, biostatic agent, antiagglomerant, anticaking agent, antistatic agent, collector agent, complexing agent, rheology control agent, hydrotrope agent, dispersant, adhesion agent, lubricant, crosslinking agent, kinetic inhibitor or stabilizer, in the fields of hygiene, cosmetics, detergents, human and animal health, agrochemicals, the textile industry, the mining industry, the fertilizer industry, the bitumen industry, road construction, road maintenance, sealing, the water treatment industry, the plastics industry, the fuel industry, the lubricants industry, the metalworking industry, and more generally the chemical, petroleum and gas industries.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008089906 A
- WO 2011147855 A
- WO 2012028542 A
- WO 2013038192 A
- WO 2014095797 A